(19) Europäisches Patentamt
European Patent Office
Office européen des brevets

(11) **EP 4 062 332 B1**

(12) **EUROPEAN PATENT SPECIFICATION**

(45) Date of publication and mention
of the grant of the patent:
**12.11.2025 Bulletin 2025/46**

(51) International Patent Classification (IPC):
**G06N 10/70** (2022.01)      **G06N 10/40** (2022.01)
**G06N 10/20** (2022.01)

(21) Application number: **20889436.0**

(22) Date of filing: **20.11.2020**

(52) Cooperative Patent Classification (CPC):
**G06N 10/20; G06N 10/40; G06N 10/70**

(86) International application number:
**PCT/US2020/061595**

(87) International publication number:
**WO 2021/102321 (27.05.2021 Gazette 2021/21)**

(54) **QUANTUM CONTROL BY MODULATING TUNABLE DEVICES IN A SUPERCONDUCTING CIRCUIT**

QUANTENSTEUERUNG DURCH MODULATION ABSTIMMBARER VORRICHTUNGEN IN EINER SUPRALEITENDEN SCHALTUNG

CONTRÔLE QUANTIQUE PAR MODULATION DE DISPOSITIFS ACCORDABLES DANS UN CIRCUIT SUPRACONDUCTEUR

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: **22.11.2019 US 201962939020 P**

(43) Date of publication of application:
**28.09.2022 Bulletin 2022/39**

(73) Proprietor: **Rigetti & Co, LLC**
**Berkeley CA 94710 (US)**

(72) Inventor: **DIDIER, Nicolas**
**Berkeley, California 94710 (US)**

(74) Representative: **Potter Clarkson**
**Chapel Quarter**
**Mount Street**
**Nottingham NG1 6HQ (GB)**

(56) References cited:
WO-A1-2018/236922      KR-A- 20170 044 137
US-B1- 10 097 186

- **DIDIER NICOLAS ET AL: "AC flux sweet spots in parametrically-modulated superconducting qubits", 26 June 2019 (2019-06-26), pages 1 - 11, XP093026011, Retrieved from the Internet <URL:https://arxiv.org/pdf/1807.01310.pdf> [retrieved on 20230222], DOI: 10.48550/arxiv.1807.01310**
- **NICOLAS DIDIER ET AL: "Analytical modeling of parametrically modulated transmon qubits", PHYSICAL REVIEW A, vol. 97, no. 2, 23 February 2018 (2018-02-23), pages 22330, XP055524163, ISSN: 2469-9926, DOI: 10.1103/PhysRevA.97.022330**
- **SABRINA S HONG ET AL: "Demonstration of a Parametrically-Activated Entangling Gate Protected from Flux Noise", ARXIV.ORG, CORNELL UNIVERSITY LIBRARY, 201 OLIN LIBRARY CORNELL UNIVERSITY ITHACA, NY 14853, 23 January 2019 (2019-01-23), XP081557644**
- **NICOLAS DIDIER: "Flux control of superconducting qubits at dynamical sweet spots", ARXIV.ORG, CORNELL UNIVERSITY LIBRARY, 201 OLIN LIBRARY CORNELL UNIVERSITY ITHACA, NY 14853, 19 December 2019 (2019-12-19), XP081569737**

EP 4 062 332 B1

- JOSEPH A VALERY ET AL: "Dynamical sweet spot engineering via two-tone flux modulation of superconducting qubits", ARXIV.ORG, CORNELL UNIVERSITY LIBRARY, 201 OLIN LIBRARY CORNELL UNIVERSITY ITHACA, NY 14853, 16 April 2021 (2021-04-16), XP081939247
- EYOB A SETE ET AL: "Parametric-resonance entangling gates with a tunable coupler", ARXIV.ORG, CORNELL UNIVERSITY LIBRARY, 201 OLIN LIBRARY CORNELL UNIVERSITY ITHACA, NY 14853, 7 September 2021 (2021-09-07), XP091047210, DOI: 10.1103/ PHYSREVAPPLIED.16.024050
- EYOB A. SETE, REAGOR MATTHEW J., DIDIER NICOLAS, RIGETTI CHAD T.: "Charge- and Flux-Insensitive Tunable Superconducting Qubit", PHYSICAL REVIEW APPLIED, vol. 8, no. 2, 1 August 2017 (2017-08-01), XP055403384, DOI: 10.1103/PhysRevApplied.8.024004
- MATTHEW WARE: "Flux-tunable superconducting transmons for quantum information processing", 1 January 2015 (2015-01-01), XP055738423, [retrieved on 20201009]

**Description**

CROSS REFERENCE TO RELATED APPLICATIONS

This application claims priority to U.S. Provisional Patent Application No. 62/939,020, filed November 22, 2019, entitled "Quantum Control by Modulating Tunable Devices in a Superconducting Circuit."

BACKGROUND

The following description relates to quantum control by modulating tunable devices in a superconducting circuit.

Quantum computers can perform computational tasks by executing quantum algorithms. Quantum algorithms are often expressed as a quantum circuit that operates on qubits. In some quantum computing architectures, the quantum circuits are implemented as a series of quantum logic gates, which may include single-qubit gates and two-qubit gates, for example.

Didier Nicolas ET AL: "AC flux sweet spots in parametrically-modulated superconducting qubits", 26 June 2019 (2019-06-26), pages 1-11, DOI: 10.48550/arxiv.1807.01310Retrieved from the Internet:URL:https://arxiv.org/pdf/1807.01310.pdf [retrieved on 2023-02-22] discloses controlling tunable qubits with single-tone modulated signals.

DESCRIPTION OF DRAWINGS

FIG. 1 is a block diagram of an example computing environment.

FIG. 2 is a block diagram showing devices and interactions in an example quantum computing system.

FIG. 3 is a circuit diagram showing an equivalent circuit of an example superconducting circuit.

FIG. 4 is an example superconducting circuit that can be represented by the equivalent circuit shown in FIG. 3.

FIG. 5 is a flow chart showing aspects of an example process.

FIG. 6 is a contour plot showing the dephasing rate $\Gamma_\phi$ as a function of the mixing angle $\alpha$ and the relative phase $\theta$ of a bichromatic modulation with $p = 2$ at $\Phi_{dc} = 0.125\ \Phi_0$ and $\Phi_{ac} = 0.75\ \Phi_0$, the dephasing rate $\Gamma_\phi$ is the dephasing rate of the qubit defined by the tunable qubit device.

FIG. 7A is a plot showing localization of dynamical sweet spots in the $\Phi_{dc}$-$\Phi_{ac}$ plane with $p = 2$.

FIG. 7B is a plot showing localization of dynamical sweet spots in the $\Phi_{dc}$-$\Phi_{ac}$ plane with $p = 3$.

FIG. 7C is a plot showing time-averaged frequency $\bar{f}$ as a function of the parking flux $\Phi_{dc}$.

FIG. 7D is a plot showing the time-averaged frequency $\bar{f}$ as a function of the modulation amplitude $\Phi_{ac}$ at $p = 3$.

FIG. 8 is a plot 800 showing the dephasing times $T_\phi$ of a tunable qubit device as a function of the time-averaged frequency $\bar{f}$.

FIG. 9A is a plot showing the maximum value of a sideband weight of a central sideband at $k = 0$ as a function of the time-averaged frequency $\bar{f}$, when a tunable qubit device is parked at dynamical sweet spots created by applying a flux bias under the bichromatic modulation with a modulation amplitude $\Phi_{ac}$ e.g., $\Phi_{ac} \leq 0.75\ \Phi_0$.

FIG. 9B is a plot showing the maximum value of a sideband weight of a sideband at $k = -1$ as a function of the time-averaged frequency $\bar{f}$ when a tunable qubit device is parked at dynamical sweet spots created by applying flux biases under the bichromatic modulation with a parking flux $\Phi_{dc}$, e.g., $0.2\ \Phi_0 \leq \Phi_{dc} \leq 0.3\ \Phi_0$.

FIG. 9C is a plot showing the maximum value of a sideband weight of a sideband at $k = -2$ as a function of the time-averaged frequency $\bar{f}$, when a tunable qubit device is parked at dynamical sweet spots created by applying flux biases under the bichromatic modulation with $p = 3$ and a parking flux $\Phi_{dc} = 0$.

FIG. 9D is a plot showing the maximum value of a sideband weight of a sideband at $k = -2$ as a function of the time-averaged frequency $\bar{f}$, when a tunable qubit device is parked at dynamical sweet spots created by applying flux biases under the bichromatic modulation with $p = 3$ and a parking flux $\Phi_{dc} = 0.5\,\Phi_0$.

FIG. 10A is a plot showing the infidelity of three two-qubit gates operated at dynamical sweet spots as a function of a transition frequency $f_{F_{01}}$ of the fixed-frequency qubit device, when a flux bias under a bichromatic modulation with $p = 2$ is applied on a tunable qubit device.

FIG. 10B is a plot showing the infidelity of three entangling gates operated at dynamical sweet spots as a function of a transition frequency $f_{F_{01}}$ of the fixed-frequency qubit device, when a flux bias under a bichromatic modulation with $p = 3$ at a maximum frequency of the band (e.g., the park flux $\Phi_{dc} = 0$) is applied on a tunable qubit device.

FIG. 10C is a plot showing the infidelity of three entangling gates operated at dynamical sweet spots as a function of a transition frequency $f_{F_{01}}$ of the fixed-frequency qubit device, when a flux bias under a bichromatic modulation with $p = 3$ at a minimum of the band (e.g., the park flux $\Phi_{dc} = 0.5\,\Phi_0$) is applied on a tunable qubit device.

FIG. 10D is a plot showing the infidelity of three entangling gates operated at dynamical sweet spots as a function of a modulation frequency $f_m$ without flux noise for $p = 3$ at a maximum frequency of the band (e.g., the park flux $\Phi_{dc} = 0$) and a fixed-transmon frequency $f_{F_{01}} = 4.57$ GHz.

FIG. 11 is a plot showing the error as a function of the time-averaged frequency $\bar{f}$.

DETAILED DESCRIPTION

The invention is defined by the independent claims. Preferred embodiments are defined by the dependent claims.
In some aspects of what is described, quantum control is achieved by modulating tunable devices in a quantum processing unit. The control systems and techniques described here may be applied, for example, in the context of single-qubit or multi-qubit quantum logic gates, qubit readout operations, state preservation and other types of operations in a quantum processing unit. In some case, one or more quantum logic gates are performed by controlling a tunable device in a quantum processing unit. The quantum logic gates can be applied, for instance, in quantum computing systems to perform computational tasks. In some instances, quantum logic gates can be implemented in a scalable architecture to achieve a scalable quantum computing system. In some instances, quantum logic gates can be engineered to improve or optimize frequency allocation in a quantum computing system, for example, to avoid resonances that could introduce noise (e.g., to avoid interactions with other qubits, to avoid interactions with system impurities such as two level systems, etc.).
In some implementations, quantum logic gates (e.g., one-qubit gates, two-qubit gates, qubit readout, identity gates, etc.) are applied to qubits defined by qubit devices in a superconducting circuit. The quantum logic gates may be applied by delivering a control signal that modulates the operating frequency of the tunable device; for instance, the control signal may be delivered to a flux bias device that controls a magnetic flux applied to the tunable device. The control signal contains multiple frequency components ("modulation tones") (e.g., the signal may correspond to a sum or weighted sum of two or more modulation tones). In some examples, the modulation tones include a fundamental tone with a fundamental frequency and one or more harmonics of the fundamental tone with one or more respective harmonic frequencies. In some examples, the modulation tones may include any arbitrary combination of frequency components, which may be generated, for example, based on optimal control theory, machine learning, or other techniques. For example, the number of frequency components, and their relative duration, phase, frequency, and amplitude may be selected according to numerical simulations or calculations. In some cases, an optimization process may select control signal parameters that optimize or otherwise improve fidelity or another measure of control.
In some implementations, a quantum logic gate is applied by delivering a control signal that modulates an operating frequency of a tunable device, and a time-averaged operating frequency of the tunable device (e.g., over the duration of the control signal) is specified according to the average qubit operating frequencies of the qubit devices targeted by the quantum logic gate. For example, the average operating frequency of the tunable device can be specified to be the sum or difference of the two average qubit operating frequencies, or the average frequency can be specified to be equal to one of the two average qubit operating frequencies. In some instances, the quantum logic gate is applied to a pair of qubits defined by a tunable qubit device and a fixed-frequency device; and the average frequency of the tunable qubit device is equal to the sum or difference of the average operating frequency of the tunable qubit device and the (fixed) operating frequency of the fixed-frequency qubit device. In some instances, the average frequency of the tunable qubit device is equal to the operating frequency of the fixed-frequency qubit device.

In some implementations, a quantum logic gate is applied by delivering a control signal that modulates the operating frequency of a tunable device, and the modulation frequency applied on the tunable device is specified according to the average qubit operating frequencies of the qubit devices targeted by the quantum logic gate. For example, the modulation frequency applied on the tunable device can be specified to be the sum or difference of the two average qubit operating frequencies, or the modulation frequency can be specified to be equal to one of the two average qubit operating frequencies. In some instances, the quantum logic gate is applied to a pair of qubits defined by a tunable qubit device and a fixed-frequency device; and the modulation frequency of the tunable qubit device is equal to the sum or difference of the average frequency of the tunable qubit device and the operating frequency of the fixed-frequency qubit device. In some instances, the modulation frequency of the tunable qubit device is equal to the operating frequency of the fixed-frequency qubit device.

The control systems and techniques described here provide technical improvements and advantages over other techniques. For example, control of a flux pulse can protect a qubit from slow flux noise (e.g., $1/f$ flux noise) for a wide range of frequencies in the tunability band of a tunable qubit device. Such control is achieved with a multi-tone (e.g., two or more modulation tones) modulation of the flux bias, that gives access to an array of dynamical sweet spots where dephasing due to slow flux noise is suppressed. For instance, there may be tens, hundreds, or thousands of dynamical sweet spots available for a quantum logic gate engineered providing a wider parameter space. In some cases, a parameter space defined by the possible gate parameters may include a region containing one or more continua of dynamical sweet spots. Protected entangling gates is then realized by operating tunable devices at any one of these dynamical sweet spots (e.g., by selecting values of gate parameters corresponding to a selected dynamical sweet spot or a selected region containing a continuum of dynamical sweet spots). The control systems and methods presented here provide a wide parameter space that allows variance in parameters of the control signal and make the qubit device more tolerant or insensitive to flux noise. Preserving long coherence times during qubit interactions may alleviate constraints on coupling strength and allow high fidelities for both single- and two-qubit gates in a scalable architecture based on static couplings. In some implementations, the quantum logic gates described here can be engineered to optimize or otherwise improve frequency allocation in a quantum computing system, for example, to minimize frequency collisions with noise sources (e.g., impurities such as two-level systems, etc.). In some cases, tunable devices may be flux controlled while being protected from slow flux noise by operating the tunable devices at one of the dynamical sweet spots. Such control techniques may be used to avoid unwanted resonances with neighboring devices, to avoid unwanted resonances with two-level system (TLS) impurities, to optimize frequency allocation for readout, or to achieve a combination of these and other purposes.

In some cases, a number of different types or classes of two-qubit quantum logic gates can be applied in the same quantum processing unit or to the same two qubits, which can allow a variety of gates and control optimization parameters. In some examples, the two-qubit quantum logic gates may include single-photon gates (e.g., iSWAP gates, square-root-of-iSWAP gates, controlled-Z gates, other XY gates, controlled-phase gates, etc.), two-photon gates (e.g., Bell-Rabi gate, square-root-of-Bell-Rabi gate, etc.) or other types of gates. In some cases, two-qubit gates can be combined with single-qubit gates (e.g., X-Rotation gates, Y-Rotation gates, Z-Rotation gates, NOT gates, Hadamard gates, or a combination of these and others) to define a universal set of quantum logic gates for universal quantum computation.

In some examples, a superconducting quantum processing unit includes an array of qubit devices that define quantum bits (qubits). Pairs of the qubit devices can be coupled to each other through a capacitor, an inductor, or another mode of coupling. In some examples, a tunable qubit device is coupled to one or more fixed-frequency qubit devices. Some example tunable qubit devices define transition frequencies that can be tuned by changing the magnetic flux that threads a circuit loop in the tunable qubit device; a control line associated with the tunable qubit device can be inductively coupled to the circuit loop to control the magnetic flux and thereby control the transition frequencies of the device. In such examples, quantum logic gates can be applied by sending a radio-frequency (rf) or microwave signal to the control line. The signal can be designed to achieve a specified quantum logic gate or other control operation.

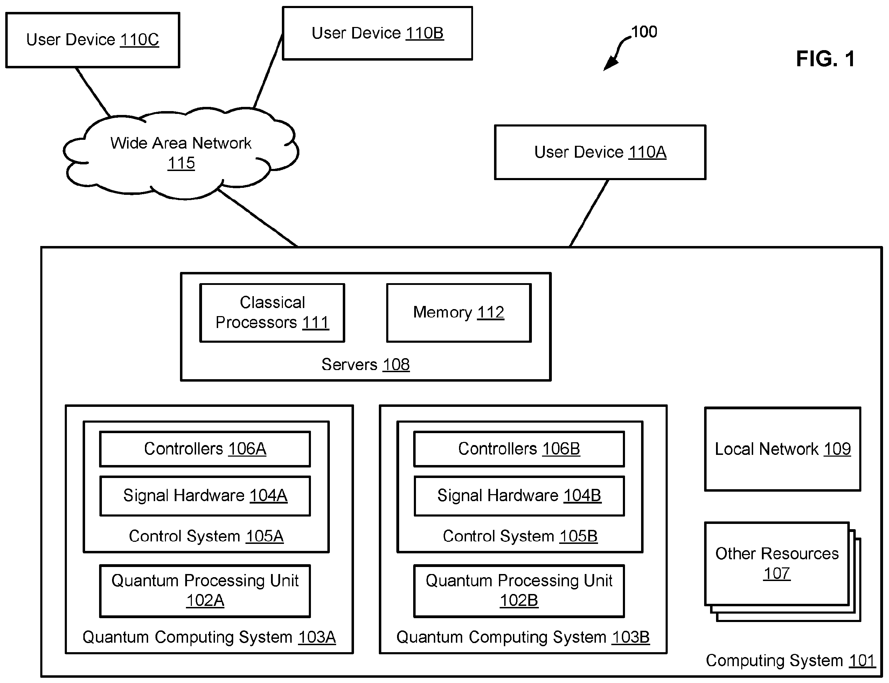

FIG. 1 is a block diagram of an example computing environment 100. The example computing environment 100 shown in FIG. 1 includes a computing system 101 and user devices 110A, 110B, 110C. A computing environment may include additional or different features, and the components of a computing environment may operate as described with respect to FIG. 1 or in another manner.

The example computing system 101 includes classical and quantum computing resources and exposes their functionality to the user devices 110A, 110B, 110C (referred to collectively as "user devices 110"). The computing system 101 shown in FIG. 1 includes one or more servers 108, quantum computing systems 103A, 103B, a local network 109, and other resources 107. The computing system 101 may also include one or more user devices (e.g., the user device 110A) as well as other features and components. A computing system may include additional or different features, and the components of a computing system may operate as described with respect to FIG. 1 or in another manner.

The example computing system 101 can provide services to the user devices 110, for example, as a cloud-based or remote-accessed computer system, as a distributed computing resource, as a supercomputer or another type of high-performance computing resource, or in another manner. The computing system 101 or the user devices 110 may also have access to one or more other quantum computing systems (e.g., quantum computing resources that are accessible through the wide area network 115, the local network 109, or otherwise).

The user devices 110 shown in FIG. 1 may include one or more classical processors, memory, user interfaces, communication interfaces, and other components. For instance, the user devices 110 may be implemented as laptop computers, desktop computers, smartphones, tablets, or other types of computer devices. In the example shown in FIG. 1, to access computing resources of the computing system 101, the user devices 110 send information (e.g., programs, instructions, commands, requests, input data, etc.) to the servers 108; and in response, the user devices 110 receive information (e.g., application data, output data, prompts, alerts, notifications, results, etc.) from the servers 108. The user devices 110 may access services of the computing system 101 in another manner, and the computing system 101 may expose computing resources in another manner.

In the example shown in FIG. 1, the local user device 110A operates in a local environment with the servers 108 and other elements of the computing system 101. For instance, the user device 110A may be co-located with (e.g., located within 0.5 to 1 km of) the servers 108 and possibly other elements of the computing system 101. As shown in FIG. 1, the user device 110A communicates with the servers 108 through a local data connection.

The local data connection in FIG. 1 is provided by the local network 109. For example, some or all of the servers 108, the user device 110A, the quantum computing systems 103A, 103B, and the other resources 107 may communicate with each other through the local network 109. In some implementations, the local network 109 operates as a communication channel that provides one or more low-latency communication pathways from the server 108 to the quantum computer systems 103A, 103B (or to one or more of the elements of the quantum computer systems 103A, 103B). The local network 109 can be implemented, for instance, as a wired or wireless Local Area Network, an Ethernet connection, or another type of wired or wireless connection. The local network 109 may include one or more wired or wireless routers, wireless access points (WAPs), wireless mesh nodes, switches, high-speed cables, or a combination of these and other types of local network hardware elements. In some cases, the local network 109 includes a software-defined network that provides communication among virtual resources, for example, among an array of virtual machines operating on the server 108 and possibly elsewhere.

In the example shown in FIG. 1, the remote user devices 110B, 110C operate remote from the servers 108 and other elements of the computing system 101. For instance, the user devices 110B, 110C may be located at a remote distance (e.g., more than 1 km, 10 km, 100 km, 1,000 km, 10,000 km, or farther) from the servers 108 and possibly other elements of the computing system 101. As shown in FIG. 1, each of the user devices 110B, 110C communicates with the servers 108 through a remote data connection.

The remote data connection in FIG. 1 is provided by a wide area network 115, which may include, for example, the Internet or another type of wide area communication network. In some cases, remote user devices use another type of remote data connection (e.g., satellite-based connections, a cellular network, a virtual private network, etc.) to access the servers 108. The wide area network 115 may include one or more internet servers, firewalls, service hubs, base stations, or a combination of these and other types of remote networking elements. Generally, the computing environment 100 can be accessible to any number of remote user devices.

The example servers 108 shown in FIG. 1 can manage interaction with the user devices 110 and utilization of the quantum and classical computing resources in the computing system 101. For example, based on information from the user devices 110, the servers 108 may delegate computational tasks to the quantum computing systems 103A, 103B and the other resources 107; the servers 108 can then send information to the user devices 110 based on output data from the computational tasks performed by the quantum computing systems 103A, 103B and the other resources 107.

As shown in FIG. 1, the servers 108 are classical computing resources that include classical processors 111 and memory 112. The servers 108 may also include one or more communication interfaces that allow the servers to communicate via the local network 109, the wide area network 115, and possibly other channels. In some implementations, the servers 108 may include a host server, an application server, a virtual server, or a combination of these and other types of servers. The servers 108 may include additional or different features, and may operate as described with respect to FIG. 1 or in another manner.

The classical processors 111 can include various kinds of apparatus, devices, and machines for processing data, including, by way of example, a microprocessor, a central processing unit (CPU), a graphics processing unit (GPU), a FPGA (field programmable gate array), an ASIC (application specific integrated circuit), or combinations of these. The memory 112 can include, for example, a random-access memory (RAM), a storage device (e.g., a writable read-only memory (ROM) or others), a hard disk, or another type of storage medium. The memory 112 can include various forms of volatile or non-volatile memory, media, and memory devices, etc.

Each of the example quantum computing systems 103A, 103B operates as a quantum computing resource in the computing system 101. The other resources 107 may include additional quantum computing resources (e.g., quantum computing systems, quantum virtual machines (QVMs), or quantum simulators) as well as classical (non-quantum) computing resources such as, for example, digital microprocessors, specialized co-processor units (e.g., graphics processing units (GPUs), cryptographic co-processors, etc.), special purpose logic circuitry (e.g., field programmable gate arrays (FPGAs), application-specific integrated circuits (ASICs), etc.), systems-on-chips (SoCs), etc., or combinations of these and other types of computing modules.

In some implementations, the servers 108 generate programs, identify appropriate computing resources (e.g., a QPU or QVM) in the computing system 101 to execute the programs, and send the programs to the identified resources for execution. For example, the servers 108 may send programs to the quantum computing system 103A, the quantum computing system 103B, or any of the other resources 107. The programs may include classical programs, quantum programs, hybrid classical/quantum programs, and may include any type of function, code, data, instruction set, etc.

In some instances, programs can be formatted as source code that can be rendered in human-readable form (e.g., as text) and can be compiled, for example, by a compiler running on the servers 108, on the quantum computing systems 103, or elsewhere. In some instances, programs can be formatted as compiled code, such as, for example, binary code (e.g., machine-level instructions) that can be executed directly by a computing resource. Each program may include instructions corresponding to computational tasks that, when performed by an appropriate computing resource, generate output data based on input data. For example, a program can include instructions formatted for a quantum computer system, a quantum virtual machine, a digital microprocessor, co-processor or other classical data processing apparatus, or another type of computing resource.

In some cases, a program may be expressed in a hardware-independent format. For example, quantum machine instructions may be provided in a quantum instruction language such as Quil, described in the publication "A Practical Quantum Instruction Set Architecture," arXiv:1608.03355v2, dated Feb. 17, 2017, or another quantum instruction language. For instance, the quantum machine instructions may be written in a format that can be executed by a broad range of quantum processing units or quantum virtual machines. In some cases, a program may be expressed in high-level terms of quantum logic gates or quantum algorithms, in lower-level terms of fundamental qubit rotations and controlled rotations, or in another form. In some cases, a program may be expressed in terms of control signals (e.g., pulse sequences, delays, etc.) and parameters for the control signals (e.g., frequencies, phases, durations, channels, etc.). In some cases, a program may be expressed in another form or format.

In some implementations, the servers 108 include one or more compilers that convert programs between formats. For example, the servers 108 may include a compiler that converts hardware-independent instructions to binary programs for execution by the quantum computing systems 103A, 103B. In some cases, a compiler can compile a program to a format that targets a specific quantum resource in the computer system 101. For example, a compiler may generate a different binary program (e.g., from the same source code) depending on whether the program is to be executed by the quantum computing system 103A or the quantum computing system 103B.

In some cases, a compiler generates a partial binary program that can be updated, for example, based on specific parameters. For instance, if a quantum program is to be executed iteratively on a quantum computing system with varying parameters on each iteration, the compiler may generate the binary program in a format that can be updated with specific parameter values at runtime (e.g., based on feedback from a prior iteration, or otherwise). In some cases, a compiler generates a full binary program that does not need to be updated or otherwise modified for execution.

In some implementations, the servers 108 generate a schedule for executing programs, allocate computing resources in the computing system 101 according to the schedule, and delegate the programs to the allocated computing resources. The servers 108 can receive, from each computing resource, output data from the execution of each program. Based on the output data, the servers 108 may generate additional programs that are then added to the schedule, output data that is provided back to a user device 110, or perform another type of action.

In some implementations, all or part of the computing environment operates as a cloud-based quantum computing (QC) environment, and the servers 108 operate as a host system for the cloud-based QC environment. The cloud-based QC environment may include software elements that operate on both the user devices 110 and the computer system 101 and interact with each other over the wide area network 115. For example, the cloud-based QC environment may provide a remote user interface, for example, through a browser or another type of application on the user devices 110. The remote user interface may include, for example, a graphical user interface or another type of user interface that obtains input provided by a user of the cloud-based QC environment. In some cases the remote user interface includes, or has access to, one or more application programming interfaces (APIs), command line interfaces, graphical user interfaces, or other elements that expose the services of the computer system 101 to the user devices 110.

In some cases, the cloud-based QC environment may be deployed in a "serverless" computing architecture. For instance, the cloud-based QC environment may provide on-demand access to a shared pool of configurable computing resources (e.g., networks, servers, storage, applications, services, quantum computing resources, classical computing resources, etc.) that can be provisioned for requests from user devices 110. Moreover, the cloud-based computing systems 104 may include or utilize other types of computing resources, such as, for example, edge computing, fog computing, etc.

In an example implementation of a cloud-based QC environment, the servers 108 may operate as a cloud provider that dynamically manages the allocation and provisioning of physical computing resources (e.g., GPUs, CPUs, QPUs, etc.). Accordingly, the servers 108 may provide services by defining virtualized resources for each user account. For instance, the virtualized resources may be formatted as virtual machine images, virtual machines, containers, or virtualized resources that can be provisioned for a user account and configured by a user. In some cases, the cloud-based QC environment is implemented using a resource such as, for example, OPENSTACK ®. OPENSTACK ® is an example of a software platform for cloud-based computing, which can be used to provide virtual servers and other virtual computing resources for users.

In some cases, the server 108 stores quantum machine images (QMI) for each user account. A quantum machine image may operate as a virtual computing resource for users of the cloud-based QC environment. For example, a QMI can provide a virtualized development and execution environment to develop and run programs (e.g., quantum programs or hybrid classical/quantum programs). When a QMI operates on the server 108, the QMI may engage either of the quantum processing unit units 102A, 102B, and interact with a remote user device (110B or 110C) to provide a user programming environment. The QMI may operate in close physical proximity to, and have a low-latency communication link with, the quantum computing systems 103A, 103B. In some implementations, remote user devices connect with QMIs operating on the servers 108 through secure shell (SSH) or other protocols over the wide area network 115.

In some implementations, all or part of the computing system 101 operates as a hybrid computing environment. For example, quantum programs can be formatted as hybrid classical/quantum programs that include instructions for execution by one or more quantum computing resources and instructions for execution by one or more classical resources. The servers 108 can allocate quantum and classical computing resources in the hybrid computing environment, and delegate programs to the allocated computing resources for execution. The quantum computing resources in the hybrid environment may include, for example, one or more quantum processing units (QPUs), one or more quantum virtual machines (QVMs), one or more quantum simulators, or possibly other types of quantum resources. The classical computing resources in the hybrid environment may include, for example, one or more digital microprocessors, one or more specialized co-processor units (e.g., graphics processing units (GPUs), cryptographic co-processors, etc.), special purpose logic circuitry (e.g., field programmable gate arrays (FPGAs), application-specific integrated circuits (ASICs), etc.), systems-on-chips (SoCs), or other types of computing modules.

In some cases, the servers 108 can select the type of computing resource (e.g., quantum or classical) to execute an individual program, or part of a program, in the computing system 101. For example, the servers 108 may select a particular quantum processing unit (QPU) or other computing resource based on availability of the resource, speed of the resource, information or state capacity of the resource, a performance metric (e.g., process fidelity) of the resource, or based on a combination of these and other factors. In some cases, the servers 108 can perform load balancing, resource testing and calibration, and other types of operations to improve or optimize computing performance.

Each of the example quantum computing systems 103A, 103B shown in FIG. 1 can perform quantum computational tasks by executing quantum machine instructions (e.g., a binary program compiled for the quantum computing system). In some implementations, a quantum computing system can perform quantum computation by storing and manipulating information within quantum states of a composite quantum system. For example, qubits (i.e., quantum bits) can be stored in and represented by an effective two-level sub-manifold of a quantum coherent physical system. In some instances, quantum logic can be executed in a manner that allows large-scale entanglement within the quantum system. Control signals can manipulate the quantum states of individual qubits and the joint states of multiple qubits. In some instances, information can be read out from the composite quantum system by measuring the quantum states of the qubits. In some implementations, the quantum states of the qubits are read out by measuring the transmitted or reflected signal from auxiliary quantum devices that are coupled to individual qubits.

In some implementations, a quantum computing system can operate using gate-based models for quantum computing. For example, the qubits can be initialized in an initial state, and a quantum logic circuit comprised of a series of quantum logic gates can be applied to transform the qubits and extract measurements representing the output of the quantum computation. Individual qubits may be controlled by single-qubit quantum logic gates, and pairs of qubits may be controlled by two-qubit quantum logic gates (e.g., entangling gates that are capable of generating entanglement between the pair of qubits). In some implementations, a quantum computing system can operate using adiabatic or annealing models for quantum computing. For instance, the qubits can be initialized in an initial state, and the controlling Hamiltonian can be transformed adiabatically by adjusting control parameters to another state that can be measured to obtain an output of the quantum computation.

In some models, fault-tolerance can be achieved by applying a set of high-fidelity control and measurement operations to the qubits. For example, quantum error correcting schemes can be deployed to achieve fault-tolerant quantum computation. Other computational regimes may be used; for example, quantum computing systems may operate in non-fault-tolerant regimes. In some implementations, a quantum computing system is constructed and operated according to a scalable quantum computing architecture. For example, in some cases, the architecture can be scaled to a large number of qubits to achieve large-scale general-purpose coherent quantum computing. Other architectures may be used; for example, quantum computing systems may operate in small-scale or non-scalable architectures.

The example quantum computing system 103A shown in FIG. 1 includes a quantum processing unit 102A and a control system 105A, which controls the operation of the quantum processing unit 102A. Similarly, the example quantum computing system 103B includes a quantum processing unit 102B and a control system 105B, which controls the operation of a quantum processing unit 102B. A quantum computing system may include additional or different features, and the components of a quantum computing system may operate as described with respect to FIG. 1 or in another manner.

In some instances, all or part of the quantum processing unit 102A functions as a quantum processing unit, a quantum memory, or another type of subsystem. In some examples, the quantum processing unit 102A includes a quantum circuit system. The quantum circuit system may include qubit devices, readout devices, and possibly other devices that are used to store and process quantum information. In some cases, the quantum processing unit 102A includes a superconducting circuit, and the qubit devices are implemented as circuit devices that include Josephson junctions, for example, in superconducting quantum interference device (SQUID) loops or other arrangements, and are controlled by control signals (e.g., radio-frequency signals, microwave signals, and low-frequency signals) delivered to the quantum processing unit 102A. In some cases, the quantum processing unit 102A includes an ion trap system, and the qubit devices are implemented as trapped ions controlled by optical signals delivered to the quantum processing unit 102A. In some cases, the quantum processing unit 102A includes a spin system, and the qubit devices are implemented as nuclear or electron spins controlled by microwave or radio-frequency signals delivered to the quantum processing unit 102A. The quantum processing unit 102A may be implemented based on another physical modality of quantum computing.

The quantum processing unit 102A may include, or may be deployed within, a controlled environment. The controlled environment can be provided, for example, by shielding equipment, cryogenic equipment, and other types of environmental control systems. In some examples, the components in the quantum processing unit 102A operate in a cryogenic temperature regime and are subject to very low electromagnetic and thermal noise. For example, magnetic shielding can be used to shield the system components from stray magnetic fields, optical shielding can be used to shield the system components from optical noise, and thermal shielding and cryogenic equipment can be used to maintain the system components at controlled temperature, etc.

In some implementations, the example quantum processing unit 102A can process quantum information by applying control signals to the qubits in the quantum processing unit 102A. The control signals can be configured to encode information in the qubits, to process the information by performing quantum logic gates or other types of operations, or to extract information from the qubits. In some examples, the operations can be expressed as single-qubit quantum logic gates, two-qubit quantum logic gates, or other types of quantum logic gates that operate on one or more qubits. A quantum logic circuit, which includes a sequence of quantum logic operations, can be applied to the qubits to perform a quantum algorithm. The quantum algorithm may correspond to a computational task, a hardware test, a quantum error correction procedure, a quantum state distillation procedure, or a combination of these and other types of operations.

The example control system 105A includes controllers 106A and signal hardware 104A. Similarly, control system 105B includes controllers 106B and signal hardware 104B. All or part of the control systems 105A, 105B can operate in a roomtemperature environment or another type of environment, which may be located near the respective quantum processing units 102A, 102B. In some cases, the control systems 105A, 105B include classical computers, signaling equipment (microwave, radio, optical, bias, etc.), electronic systems, vacuum control systems, refrigerant control systems, or other types of control systems that support operation of the quantum processing units 102A, 102B.

The control systems 105A, 105B may be implemented as distinct systems that operate independent of each other. In some cases, the control systems 105A, 105B may include one or more shared elements; for example, the control systems 105A, 105B may operate as a single control system that operates both quantum processing units 102A, 102B. Moreover, a single quantum computer system may include multiple quantum processing units, which may operate in the same controlled (e.g., cryogenic) environment or in separate environments.

The control systems 105A, 105B are communicably coupled to the respective quantum processing units 102A, 102B. The control system is configured to apply control operations to qubits defined in the superconducting circuit; the control operations are applied to the qubits by delivering control signals to the tunable devices. The control operations can include quantum logic gates. The quantum logic gates may include readout operations (e.g., to measure the state of a qubit), single-qubit gates (to manipulate the state of an individual qubit), two-qubit gates (e.g., to manipulate the states of two qubits), identity gates (e.g., to preserve the state of one or more qubits), and potentially other types of gates.

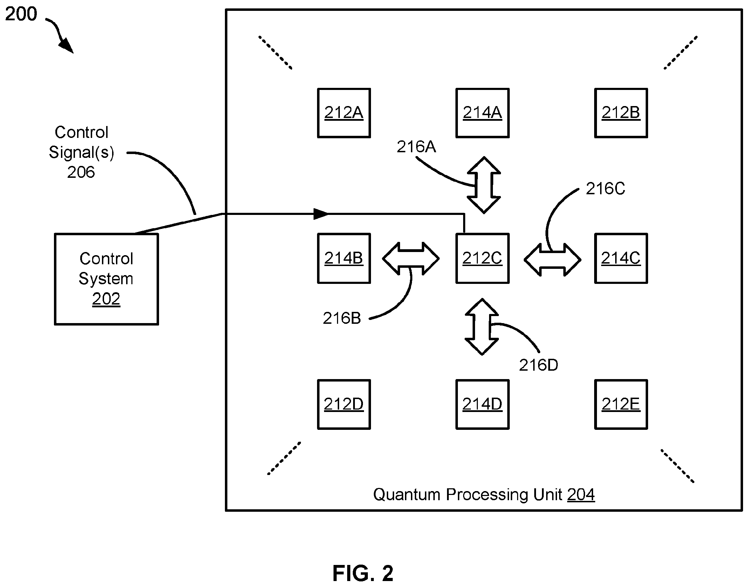

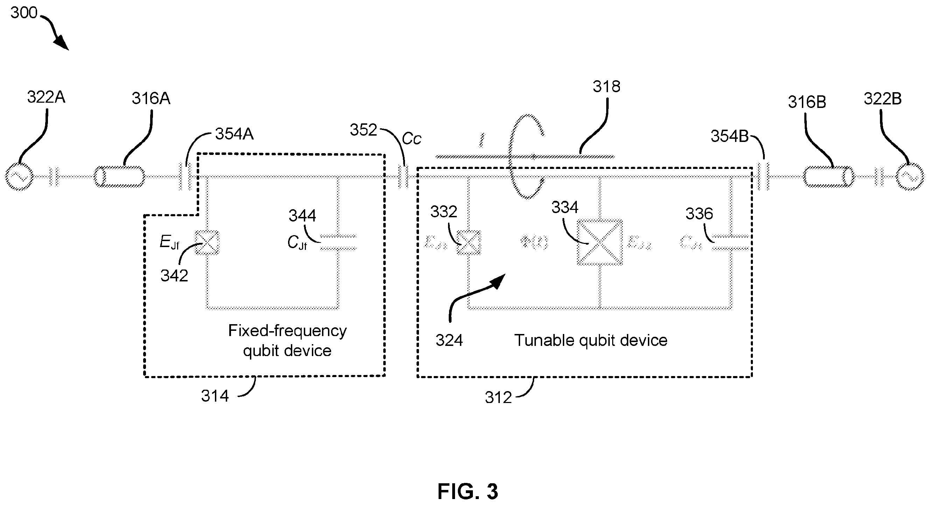

In some implementations, each of the control systems 105A, 105 is implemented as the control system 202 in FIG. 2, which generates and delivers a control signal to a quantum computing system. In some aspects, a quantum computing system includes a superconducting circuit that includes multiple circuit devices. The multiple circuit devices include a tunable device coupled to another tunable device or to a fixed-frequency device. In some instances, the tunable device may be implemented as the tunable device 212 in FIG. 2 or the tunable qubit device 312 in FIG. 3. In some instances, a tunable device frequency is modulated in a quantum processing unit by operation of the control system. In certain instances, coupling between qubits is modulated in a quantum processing system.

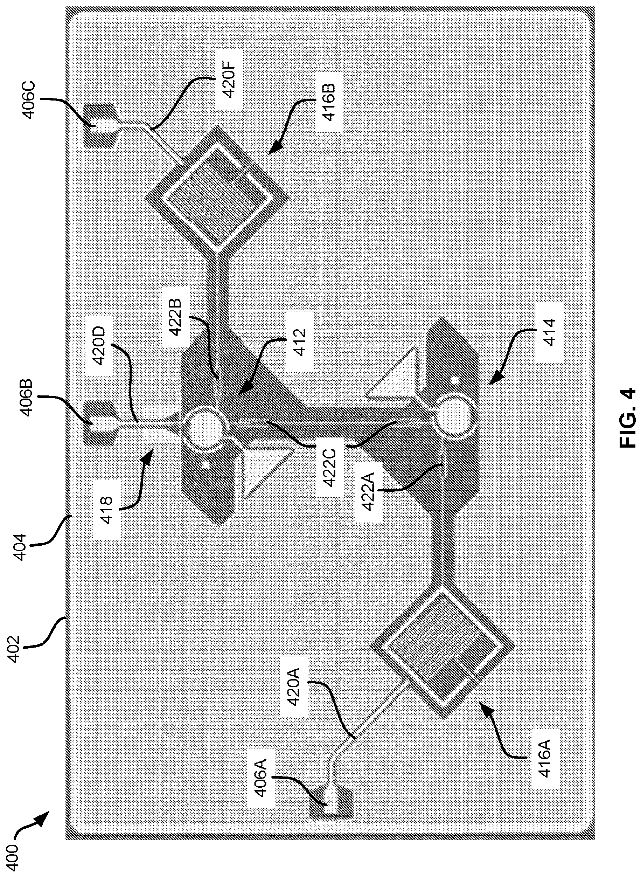

In some implementations, a control signal from a control system can be delivered to a tunable device using a control line, e.g., via a flux bias device 418 in FIG. 4 or another type of flux bias device. The control signal controls a magnetic flux that is generated by the flux bias device and applied to the tunable device. The magnetic flux can tune an operating frequency of the tunable device. The control signal can contain multiple modulation tones. For instance, the control signal can be a bichromatic modulation signal. In some instances, a control signal corresponds to a sum or a superposition of the multiple modulation tones including a fundamental tone with a fundamental frequency and one or more harmonics of the fundamental tone with one or more harmonic frequencies. Parameters of the control signal may be generated by an optimal control theory system, a machine learning system, or through another type of process.

The tunable device can be a tunable qubit device, and the quantum logic gate can be a one-qubit quantum logic gate applied to a qubit defined by the tunable qubit device. The tunable device can be a tunable qubit device, and the quantum logic gate can be a two-qubit quantum logic gate applied to a pair of qubits defined by the tunable qubit device and another qubit device. Other types of quantum control operations may be applied in some cases.

In order to protect a qubit from any flux noise that may affect the tunable qubit device, a control signal delivered to the tunable qubit device is configured to render the qubit insensitive to flux noise, by operating the tunable qubit device at a dynamical sweet spot. Values of parameters can be selected from an array or continuum of dynamical sweet spots. For example, a parameter space for the control signal parameters may include one or more regions of dynamical sweet spots (e.g., a continuous or discrete array of dynamical sweet spots), and the values of the parameters for the control signal can be selected from the one or more regions. In some implementations, the values of the parameters for the control signal can be selected so that the fidelity of the control operation is optimized or meets a designated control criterion. For example, values of the parameters for a control signal, for example the number of tones, the relative duration, relative phase, modulation frequency and modulation amplitude, may be selected according to a cost function based on a fidelity of the control operation in numerical simulations or calculations. In some instances, the control signal can be a set of step functions. In some instances, the control signal can include one or more step functions of different amplitudes and different time durations.

The control signal can be configured such that the time-averaged operating frequency of the tunable device (e.g., over the duration of the control signal) is determined by (a) the time-averaged frequency of a tunable qubit device targeted by the quantum logic gate; (b) the time-averaged frequencies of two qubit devices targeted by the quantum logic gate; or (c) the sum or difference of the time-averaged qubit operating frequencies of qubit devices targeted by the quantum logic gate. The control signal can have a modulation frequency (e.g., over the duration of the control signal) equal to: (a) the average qubit operating frequency of a qubit device targeted by the quantum logic gate; (b) the time-average qubit operating frequencies of two qubit devices targeted by the quantum logic gate; or (c) the sum or difference of the time-average qubit operating frequencies of qubit devices targeted by the quantum logic gate. The control signal can be configured in another manner in some cases.

The example signal hardware 104A includes components that communicate with the quantum processing unit 102A. The signal hardware 104A may include, for example, waveform generators, amplifiers, digitizers, high-frequency sources, DC sources, AC sources, etc. The signal hardware may include additional or different features and components. In the example shown, components of the signal hardware 104A are adapted to interact with the quantum processing unit 102A. For example, the signal hardware 104A can be configured to operate in a particular frequency range, configured to generate and process signals in a particular format, or the hardware may be adapted in another manner.

In some instances, one or more components of the signal hardware 104A generate control signals, for example, based on control information from the controllers 106A. The control information from the controllers 106A can include digital waveforms or parameters of digital waveforms. In some cases, the digital waveform is a digital representation of one or more pulses (e.g., a radio-frequency or microwave pulse) or pulse sequences to be generated by the signal hardware 104A and delivered to one or more devices in the quantum processing unit 102A. For example, the digital waveform may include a series of voltage amplitudes for respective time segments of a radio-frequency or microwave control signal.

The control signals generated by the signal hardware 104A can be delivered to the quantum processing unit 102A during operation of the quantum computing system 103A. For instance, the signal hardware 104A may generate signals to implement quantum logic operations, readout operations, or other types of operations. As an example, the signal hardware 104A may include arbitrary waveform generators (AWGs) that generate electromagnetic waveforms (e.g., microwave or radio-frequency) or laser systems that generate optical waveforms. The waveforms or other types of signals generated by the signal hardware 104A can be delivered to devices in the quantum processing unit 102A to operate qubit devices, readout devices, bias devices, coupler devices, or other types of components in the quantum processing unit 102A.

In some instances, the signal hardware 104A receives and processes signals from the quantum processing unit 102A. The received signals can be generated by the execution of a quantum program on the quantum computing system 103A. For instance, the signal hardware 104A may receive signals from the devices in the quantum processing unit 102A in response to readout or other operations performed by the quantum processing unit 102A. Signals received from the quantum processing unit 102A can be mixed, digitized, filtered, or otherwise processed by the signal hardware 104A to extract information, and the information extracted can be provided to the controllers 106A or handled in another manner. In some examples, the signal hardware 104A may include a digitizer that digitizes electromagnetic waveforms (e.g., microwave or radio-frequency) or optical signals, and a digitized waveform can be delivered to the controllers 106A or to other signal hardware components. In some instances, the controllers 106A process the information from the signal hardware 104A and provide feedback to the signal hardware 104A; based on the feedback, the signal hardware 104A can in turn generate new control signals that are delivered to the quantum processing unit 102A.

In some implementations, the signal hardware 104A includes signal delivery hardware that interfaces with the quantum processing unit 102A. For example, the signal hardware 104A may include filters, attenuators, directional couplers, multiplexers, diplexers, bias components, signal channels, isolators, amplifiers, power dividers and other types of components. In some instances, the signal delivery hardware performs preprocessing, signal conditioning, or other operations to the control signals to be delivered to the quantum processing unit 102A. In some instances, signal delivery hardware performs preprocessing, signal conditioning, or other operations on readout signals received from the quantum processing unit 102A.

The example controllers 106A communicate with the signal hardware 104A to control operation of the quantum computing system 103A. The controllers 106A may include classical computing hardware that directly interface with components of the signal hardware 104A. The example controllers 106A may include classical processors, memory, clocks, digital circuitry, analog circuitry, and other types of systems or subsystems. The classical processors may include one or more single- or multi-core microprocessors, digital electronic controllers, special purpose logic circuitry, e.g., an FPGA (field programmable gate array) or an ASIC (application specific integrated circuit), or other types of data processing apparatus. The memory may include any type of volatile or non-volatile memory or another type of computer storage medium. The controllers 106A may also include one or more communication interfaces that allow the controllers 106A to communicate via the local network 109 and possibly other channels. The controllers 106A may include additional or different features and components.

In some implementations, the controllers 106A include memory or other components that store quantum state information, for example, based on qubit readout operations performed by the quantum computing system 103A. For instance, the states of one or more qubits in the quantum processing unit 102A can be measured by qubit readout operations, and the measured state information can be stored in a cache or other type of memory system in one or more of the controllers 106A. In some cases, the measured state information is subsequently used in the execution of a quantum program, a quantum error correction procedure, a quantum processing unit (QPU) calibration or testing procedure, or another type of quantum process.

In some implementations, the controllers 106A include memory or other components that store a quantum program containing quantum machine instructions for execution by the quantum computing system 103A. In some instances, the controllers 106A can interpret the quantum machine instructions and perform hardware-specific control operations according to the quantum machine instructions. For example, the controllers 106A may cause the signal hardware 104A to generate control signals that are delivered to the quantum processing unit 102A to execute the quantum machine instructions.

In some instances, the controllers 106A extract qubit state information from qubit readout signals, for example, to identify the quantum states of qubits in the quantum processing unit 102A or for other purposes. For example, the controllers may receive the qubit readout signals (e.g., in the form of analog waveforms) from the signal hardware 104A, digitize the qubit readout signals, and extract qubit state information from the digitized signals. In some cases, the controllers 106A compute measurement statistics based on qubit state information from multiple shots of a quantum program. For example, each shot may produce a bitstring representing qubit state measurements for a single execution of the quantum program, and a collection of bitstrings from multiple shots may be analyzed to compute quantum state probabilities.

In some implementations, the controllers 106A include one or more clocks that control the timing of operations. For example, operations performed by the controllers 106A may be scheduled for execution over a series of clock cycles, and clock signals from one or more clocks can be used to control the relative timing of each operation or groups of operations. In some implementations, the controllers 106A may include classical computer resources that perform some or all of the operations of the servers 108 described above. For example, the controllers 106A may operate a compiler to generate binary programs (e.g., full or partial binary programs) from source code; the controllers 106A may include an optimizer that performs classical computational tasks of a hybrid classical/quantum program; the controllers 106A may update binary programs (e.g., at runtime) to include new parameters based on an output of the optimizer, etc.

The other quantum computer system 103B and its components (e.g., the quantum processing unit 102B, the signal hardware 104B, and controllers 106B) can be implemented as described above with respect to the quantum computer system 103A; in some cases, the quantum computer system 103B and its components may be implemented or may operate in another manner.

In some implementations, the quantum computer systems 103A, 103B are disparate systems that provide distinct modalities of quantum computation. For example, the computer system 101 may include both an adiabatic quantum computer system and a gate-based quantum computer system. As another example, the computer system 101 may include a superconducting circuit-based quantum computer system and an ion trap-based quantum computer system. In such cases, the computer system 101 may utilize each quantum computing system according to the type of quantum program that is being executed, according to availability or capacity, or based on other considerations.

FIG. 2 is a block diagram showing devices and interactions in an example quantum computing system 200. As shown in FIG. 2, the example quantum computing system 200 includes a control system 202 and a quantum processing unit 204. As shown in FIG. 2, the example quantum processing unit 204 includes a device array, which includes devices arranged in a two-dimensional or three-dimensional lattice structure. Nine of the devices in the device array are shown in FIG. 2. In particular, FIG. 2 shows five tunable devices 212, e.g., 212A, 212B, 212C, 212D, 212E and four other devices 214, e.g., 214A, 214B, 214C, 214D. The quantum computing system 200 may include additional or different features, and the components may be arranged in another manner.

In some implementations, the tunable devices 212 are implemented as tunable-frequency devices, including tunable transmon devices, flux devices, flatsonium devices, fluxonium devices, or other types of tunable devices. In some examples, the other devices 214 may be implemented as tunable devices. In some examples, the other devices 214 may be implemented as fixed-frequency devices. For instance, other devices 214 may be implemented as fixed-frequency transmon devices or other types of fixed-frequency devices. The devices shown in FIG. 2 may operate as qubit devices, coupler devices, or other types of devices or components. In some implementations, the tunable devices 212 may be implemented as the tunable qubit device 312 and the other devices 214 may be implemented as the fixed-frequency qubit device 314 shown in FIG. 3.

In the example shown in FIG. 2, the devices are arranged in a rectilinear (e.g., rectangular, or square) array that extends in two spatial dimensions (e.g., in the plane of the page), and each device has four nearest-neighbor devices. In some implementations, the devices can be arranged in another type of ordered array. In some instances, the rectilinear array also extends in a third spatial dimension (e.g., in/out of the page), for example, to form a cubic array or another type of three-dimensional array. The quantum processing unit 204 may include additional devices, including additional qubit devices, readout resonators, or another quantum circuit device.

In some implementations, the control system 202 interfaces with the quantum processing unit 204 through a signal delivery system that includes connector hardware elements. For example, the control system connector hardware can include signal lines, signal processing hardware, filters, feedthrough devices (e.g., light-tight feedthroughs, etc.), and other types of components. In some implementations, the control system connector hardware can span multiple different temperature and noise regimes. For example, the control system connector hardware can include a series of temperature stages operating at different temperatures, e.g., 60 Kelvin (K), 3 K, 800 milli Kelvin (mK), 150 mK, that decrease between a higher temperature regime of the control system 202 and a lower temperature regime of the quantum processing unit 204.

In some implementations, the quantum processing unit 204, and all or part of the signal delivery system and connection hardware elements, can be maintained in a controlled cryogenic environment. The environment can be provided, for example, by shielding equipment, cryogenic equipment, and other types of environmental control systems. In some examples, the components in the quantum processing unit 204 operate in a cryogenic temperature regime and are subject to very low electromagnetic and thermal noise. For example, magnetic shielding can be used to shield the system components from stray magnetic fields, optical shielding can be used to shield the system components from optical noise, and thermal shielding and cryogenic equipment can be used to maintain the system components at controlled temperatures, etc.

In certain instances, the example control system 202 shown in FIG. 2 may include, for example, a signal generator system, a program interface, a signal processing system, and possibly other components. In some instances, components of the control system 202 can operate in a room temperature regime, an intermediate temperature regime, or both. For example, the control system 202 can be configured to operate at much higher temperatures and be subject to much higher levels of noise than are present in the environment of the quantum processing unit 204.

In the example quantum processing unit 204 shown in FIG. 2, some or all of the devices operate as qubit devices that can be encoded with a single bit of quantum information. Typically, each of the qubit devices has two eigenstates that are used as computational basis states ("0" and "1"), and each qubit device can transition between its computational basis states or exist in an arbitrary superposition of its computational basis states. In some examples, the two lowest energy levels (e.g., the ground state and first excited state) of each qubit device are defined as a qubit and used as computational basis states for quantum computation. In some examples, higher energy levels (e.g., a second excited state or a third excited state) are also defined by a qubit device and may be used for quantum computation in some instances.

In some implementations, the tunable devices 212 are housed between neighboring pairs of the other devices 214 in a device array within the quantum processing unit 204. The quantum states of the respective qubit devices can be manipulated by control signals, or read by readout signals, generated by the control system 202. The qubit devices can be controlled individually, for example, by delivering control signals to the respective qubit devices. In some cases, a neighboring set of devices (e.g., tunable device 212C and other device 214A) is controlled jointly by delivering control signals to the tunable device. In some cases, readout devices can detect the states of the qubit devices, for example, by interacting directly with the respective qubit devices.

In the example shown in FIG. 2, the energy difference E between any two adjacent energy levels in a qubit device can be represented as a transition frequency $\omega$ of the qubit device (e.g., according to $\omega = E/\hbar$). In some examples, a transition frequency of a qubit device is tunable, for example, by application of an offset field. For instance, a tunable qubit device (e.g., a tunable transmon qubit device, a fluxonium qubit device, etc.) may include a superconducting loop (e.g., a SQUID loop) that is tunable by application of a magnetic flux. In some examples, the transition frequency of a qubit device is not tunable by application of an offset field and is independent of magnetic flux experienced by the qubit device. For instance, a fixed-frequency qubit device may have a fixed transition frequency that is defined by an electronic circuit of the qubit device. As an example, a superconducting qubit device (e.g., a fixed-frequency transmon qubit) may be implemented without a SQUID loop.

In some examples, a tunable device includes a superconducting circuit loop that receives a magnetic flux that tunes the transition frequency of the tunable device. As an example, the superconducting circuit loop may include two Josephson junctions, and the tunable qubit device may also include a capacitor structure in parallel with each of the two Josephson junctions. The transition frequency of the tunable qubit device may be defined at least in part by Josephson energies of the two Josephson junctions, a capacitance of the capacitor structure, and a magnetic flux threading the superconducting circuit loop. In some examples, a fixed-frequency qubit device that includes a single Josephson junction, and the transition frequency of the fixed-frequency qubit device is defined at least in part by a Josephson energy of the Josephson junction, which is independent of a magnetic flux experienced by the fixed-frequency qubit device.

As a particular example, FIG. 3 shows an equivalent circuit of an example tunable qubit device 312, which includes a superconducting circuit loop 324 that receives a magnetic flux $\Phi(t)$ that controls the transition frequency of the tunable qubit device 312. Manipulating the magnetic flux $\Phi(t)$ through the circuit loop 324 can increase or decrease transition frequencies of the example tunable qubit device 312. In this example, the magnetic flux $\Phi(t)$ through the SQUID loop is an offset field that can be modified in order to tune the transition frequency. In some cases, an inductor or other type of flux bias device is coupled to the SQUID loop by a mutual inductance, and the magnetic flux $\Phi(t)$ through the SQUID loop can be controlled by the current through the inductor. In some cases, a coupling strength can be controlled by both AC and DC components of the current.

In the example shown in FIG. 2, each tunable device 212A, 212B, 212C, 212D, 212E has one or more tunable transition frequencies. In particular, the transition frequencies of the tunable devices 212A, 212B, 212C, 212D, 212E can be tuned by applying an offset field to the tunable qubit device or in another manner. In certain examples, the offset field can be, for example, a magnetic flux bias, a DC electrical voltage, or another type of field. In some implementations, the tunability of the tunable devices 212A, 212B, 212C, 212D, 212E in the quantum processing unit 204 allows pairs of devices to be selectively coupled on-demand to perform multi-qubit gates, to entangle pairs of qubits, or to perform other types of operations. The tunable devices can have a high "on/off" ratio, which refers to the ratio of the effective coupling rate provided by control of the tunable device.

In some implementations, the other devices 214A, 214B, 214C, 214D are implemented as fixed-frequency devices whose relevant transition frequencies do not respond to offset fields. In some cases, the tunable devices 212A, 212B, 212C, 212D, 212E can be selectively activated by an offset field that does not directly affect the information encoded in the other devices 214A, 214B, 214C, 214D. For instance, although the offset field may cause the tunable device 212C to interact with one of the other devices 214A, 214B, 214C, 214D, the offset field does not modify the transition frequencies of the other devices 214A, 214B, 214C, 214D (even if the other qubit devices experience the offset field). In this manner, the combination of tunable devices with fixed-frequency devices may allow selective, on-demand coupling of qubits.

In some instances, information is encoded in the qubit devices in the quantum processing unit 204, and the information can be processed by operation of the tunable devices 212A, 212B, 212C, 212D, 212E. For instance, input information can be encoded in the computational states or computational subspaces defined by some of all of the qubit devices in the quantum processing unit 204. The information can be processed, for example, by applying a quantum algorithm or other operations to the input information. The quantum algorithm may be decomposed as gates or instruction sets that are performed by the qubit devices over a series of clock cycles. For instance, a quantum algorithm may be executed by a combination of single-qubit gates and two-qubit gates. In some cases, information is processed in another manner. Processing the information encoded in the qubit devices can produce output information that can be extracted from the qubit devices. The output information can be extracted, for example, by performing state tomography or individual readout operations. In some instances, the output information is extracted over multiple clock cycles or in parallel with the processing operations.

In some aspects of operation, the control system 202 sends control signals to the tunable devices in the quantum processing unit 204. The control signals can be configured to modulate, increase, decrease, or otherwise manipulate the transition frequencies of the tunable devices 212A, 212B, 212C, 212D, 212E. For example, the control signal can be a bias signal that varies a magnetic flux experienced by the tunable qubit device, and varying the magnetic flux can change the transition frequency of the tunable qubit device. In some implementations, a control signal can be a direct current (DC) signal communicated from the control system 202 to the individual tunable qubit device. In some implementations, a control signal can be an alternating current (AC) signal communicated from the control system 202 to the individual tunable qubit device. In some cases, the AC signal may be superposed with a direct current (DC) signal. Other types of control signals may be used.

In the example shown in FIG. 2, the control system 202 sends control signals 206 to the tunable device 212C to generate interactions between the tunable device 212C and other devices. For instance, the control signals 206 can generate a first interaction 216A between the tunable device 212C and the other device 214A, a second interaction 216B between the tunable device 212C and the other device 214B, a third interaction 216C between the tunable device 212C and the other device 214C, a fourth interaction 216D between the tunable device 212C and the other device 214D, or a combination of them in series or in parallel. In some cases, the control signals 206 can generate an interaction that is mediated by the tunable device 212C. For instance, the control signals 206 may generate an interaction between any pair of the other devices 214A, 214B, 214C, 214D, in which the tunable device 212C acts as a coupler that mediates the interaction generated by the control signals 206.

In some implementations, the control signals 206 are configured to apply a control operation on the qubit defined by the tunable device 212. A control signal 206 may be a current signal, a voltage signal, or another type of electrical signal which can be used to control a control line, for example with a flux bias device, to modulate a magnetic flux and generate a modulated magnetic flux (e.g., a modulated flux bias). The modulated magnetic flux contains multiple frequencies (e.g., a signal representing a superposition of multiple frequencies). In some cases, the frequencies include a fundamental frequency $f_m$ and one or more harmonics of the fundamental frequency $\{pf_m\}$, where $p$ can be any set of integers. In some cases, modulating the flux bias with a multi-frequency signal can produce a greater number of dynamical sweet spots. Dynamical sweet spots represent operating points at which the qubit defined by the tunable device 212 is insensitive, to first order, to both additive and multiplicative slow flux noise. When a tunable qubit device is insensitive to slow flux noise, the dephasing time $T_{\phi\_m}$ of the qubit defined by the tunable qubit device when the modulated magnetic flux is applied is comparable to (e.g., substantially equal to, or the same order of magnitude as) the dephasing time $T_{\phi\_idle}$ of the qubit when the control signal is not applied to the tunable qubit device. For example, when the values are substantially equal, the value of $T_{\phi\_m}/T_{\phi\_idle}$. can be greater than or equal to 99.95%, 99.9%, 99%, or 90%; when the values are the same order of magnitude, the value of $T_{\phi\_m}/T_{\phi\_idle}$, can be greater than or equal to 50% or 10%. Here, $T_{\phi\_idle}$ represents the dephasing time of the qubit when the control signal is not applied, and the tunable qubit device is parked at its maximum frequency of the frequency band.

For some types of flux modulation (e.g., a bichromatic modulation), a control signal applied on a flux bias device renders a qubit insensitive to flux noise when, to first order, the state of the qubit is not sensitive to fluctuations in the parameters of the control signal. In other words, a qubit may be rendered insensitive to flux noise when noise in control parameters do not affect the qubit, for example, in a way that causes dephasing of the qubit. The dephasing time is usually limited by $1/f$ flux noise. Theoretically, when the parameters for the control signal are chosen such that the slope of the time-averaged frequency under modulation with respect to the parameters of the modulated magnetic flux (e.g., $\partial\bar{f}/\partial\Phi_{dc}$ and $\partial\bar{f}/\partial\Phi_{ac}$) vanishes, e.g., $\partial\bar{f}/\partial\Phi_{dc} = 0$ and $\partial\bar{f}/\partial\Phi_{ac} = 0$, the control signal renders the qubit insensitive at first order to slow flux noise. Practically, when a qubit is rendered insensitive to slow flux noise, absolute values of the slopes, e.g., $|\partial\bar{f}/\partial\Phi_{dc}|$ or $|\partial\bar{f}/\partial\Phi_{ac}|$, can be less than or equal to 1 GHz/$\Phi_0$, 100 MHz/$\Phi_0$, 10MHz/$\Phi_0$, 1 MHz/$\Phi_0$, or within another range. Dynamical sweet spots are thus found at critical points of the average frequency in the parking-flux/modulation-amplitude plane, e.g., $\Phi_{dc}$ - $\Phi_{ac}$ plane. In some implementations, for some types of flux modulation (e.g., a bichromatic modulation), the tunable qubit device need not be operated at a dynamical sweet spot when used for qubit manipulations, or in another type of application.

In the presence of slow flux noise, the dephasing rate $\Gamma_\phi$ of the qubit defined by the tunable qubit device is proportional to the slope of the time-averaged frequency under modulation with respect to the parameters of the modulated magnetic flux (e.g., $\partial\bar{f}/\partial\Phi_{dc}$ and $\partial\bar{f}/\partial\Phi_{ac}$)· In some instances, the dephasing rate $\Gamma_\phi = 30 \cdot A \cdot$ slope, where $A$ is the 1/f flux noise strength. For example, when the $1/f$ flux noise strength A and the slope are equal and when $A$ is of the order of 10 $\mu\Phi_0$, a slope of 3 MHz/$\Phi_0$, gives rise to a dephasing time of the order of 1 millisecond (ms). In some implementations, dephasing from slow flux noise may not limit the total dephasing time if other sources of dephasing have shorter dephasing times.

In some implementations, the control signals 206 are configured to generate interactions that perform quantum logic gates on the quantum states of one or more of the qubit devices. For example, in some cases, one or more of the control signals 206 generate an interaction that applies a two-qubit quantum logic gate to a pair of qubits defined by two of the qubit devices in the quantum processing unit 204. The control signals 206 may activate quantum logic gates by modulating a transition frequency of the tunable device 212C.

In some instances, the control system 202 identifies a quantum logic gate to be applied to a pair of qubits in the quantum processing unit 204. The pair of qubits can be, for example, a first qubit defined by the tunable qubit device 212C and a second qubit defined by one of the other qubit devices (e.g., 214A, 214B, 214C, 214D) that neighbor the tunable qubit device 212C in the qubit device array. The control signal 206 can be configured to apply the quantum logic gate by modulating the flux bias with multiple frequencies (e.g., tones), for example, using a bichromatic modulation or another multi-chromatic modulation. The control system 202 can apply the quantum logic gate by communicating the control signal 206 to a control line that is coupled to the tunable qubit device 212C in the quantum processing unit 204.

The parameters of the control signal 206 can be selected to achieve a specified quantum logic gate. In some systems, the control signal 206 contains one or more modes, e.g., radio frequency or microwave frequency modes, for example, in the range of 1 MHz to 20 GHz. In some systems, the duration of the control signal 206 is less than a coherence time of the qubit (e.g., in the range of 1 nanosecond to 1 millisecond in some example systems). Other parameter regimes may be used in superconducting systems or other types of systems.

In some systems, applying the two-qubit quantum logic gate to the pair of qubits may include applying any quantum logic gate from the XY family of gates, the controlled-phase family of gates, the iSWAP family of gates, or another family of gates. In some cases, applying the two-qubit quantum logic gate to the pair of qubits includes applying a controlled-phase gate (e.g., a controlled-Z gate) to the pair of qubits. In some cases, applying the two-qubit quantum logic gate to the pair of qubits includes applying a Bell-Rabi gate, a square-root-of-Bell-Rabi gate, or another two-photon gate to the pair of qubits.

In some cases, the control line (which receives the control signal 206) may include a flux bias device that is inductively coupled to the superconducting circuit loop of the tunable device 212C to control the magnetic flux through a superconducting circuit loop in the tunable device 212C. The control signal 206 may cause the flux bias device to modulate the magnetic flux at multiple modulation frequencies. In some instances, the control line and the superconducting circuit loop are implemented as the control line 318 and the circuit loop 324 shown in FIG. 3.

In some implementations, the control system 202, or another type of system associated to the quantum computing system 200, determines gate parameters for applying parametrically activated quantum logic gates in the quantum processing unit 204 and determines values of parameters for the control signal 206. For example, values of the parameters for the control signal 206 may be determined by a gate calibration process defined in software, firmware, or hardware or a combination thereof. In some cases, the control system 202 executes a gate calibration process when the quantum processing unit 204 is first installed for use in the quantum computing system 200, and the gate calibration process may be repeated at other times (e.g., as needed, periodically, according to a calibration schedule, etc.). For instance, a gate calibration module may execute a calibration process that obtains values of qubit device parameters of the qubit devices in the quantum processing unit 204. In some instances, the qubit device parameters include qubit device parameters for the tunable device 212 and the other devices 214, for example, a range of qubit operating frequency and anharmonicity of the tunable qubit device, an operating frequency and anharmonicity of the fixed-frequency qubit device, and a coupling between the tunable qubit device and the fixed-frequency qubit device, or another parameter.

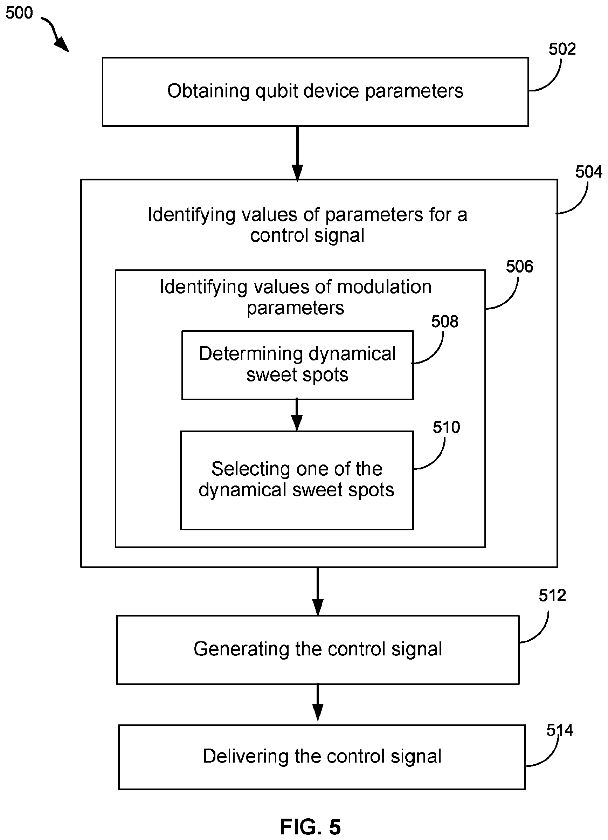

In some instances, the values of the qubit device parameters are used to determine the values of the parameters for the control signal. In some implementations, the parameters for the control signal 206 may include the number of modulation tones, the relative duration, relative phase, modulation frequency, modulation amplitude, or another parameter. In some instances, the values of the parameters for the control signal that are used to cause the flux bias device to modulate the magnetic flux applied on the tunable device 212 are identified with respect to the example process 500 shown in FIG. 5 or in another manner.

FIG. 3 is a circuit diagram showing an equivalent circuit 300 of an example superconducting circuit. The equivalent circuit 300 represented in FIG. 3 includes a tunable qubit device 312, a fixed-frequency qubit device 314, and a control line 318. The example equivalent circuit 300 further includes a source 322A and readout resonator 316A coupled to the fixed-frequency qubit device 314 via a capacitor 354A. The example equivalent circuit 300 also includes a source 322B and readout resonator 316B coupled to the tunable qubit device 312 via a capacitor 354B. In some examples, the tunable qubit device 312 and the fixed-frequency qubit device 314 may be implemented by other types of systems, and the features and components represented in FIG. 3 can be extended in a larger two-dimensional or three-dimensional array of devices. For instance, the equivalent circuit 300 in FIG. 3 can represent any of the tunable devices 212 and one of its nearest-neighbor devices 214 in the quantum processing unit 204 in FIG. 2, or the equivalent circuit 300 in FIG. 3 can represent devices in another type of system or environment. The quantum computing system may include additional or different features, and the components may be arranged as shown or in another manner.

In the example shown in FIG. 3, the tunable qubit device 312 is implemented as a tunable-frequency transmon qubit device. As shown, the tunable qubit device 312 includes two Josephson junctions, e.g., a first Josephson junction 332 and a second Josephson junction 334. The first and second Josephson junctions 332, 334 having Josephson energies $E_{J1}$ and $E_{J2}$ are connected in parallel with each other to form a circuit loop 324, which resides adjacent to the control line 318. The tunable qubit device 312 also includes a capacitor 336 with a shunt capacitance $C_{Jt}$, which is connected in parallel with the two Josephson junctions 332, 334. In some implementations, the control line 318 can be a conductor, an inductor, or another type of circuit component configured to carry a current $I$, which generates a magnetic flux $\Phi(t)$ through the circuit loop 324 in the tunable qubit device 312.

In the example shown in FIG. 3, the fixed-frequency qubit device 314 is implemented as a fixed-frequency transmon qubit device. As shown, the fixed-frequency qubit 314 includes a Josephson junction 342 having Josephson energy $E_{Jf}$ and a capacitor 344 with a shunt capacitance $C_{Jf}$, which are connected in parallel. The fixed-frequency qubit device 314 is capacitively coupled to the tunable qubit device 312 through a capacitor 352 with a capacitance $C_c$. In the example shown in FIG. 3, a parameter $g$ can represent the capacitive coupling strength between the fixed-frequency qubit device 314 and the tunable qubit device 312.

In some instances, the fixed-frequency qubit device 314 and the tunable qubit device 312 are coupled together through a tunable coupler device. The tunable coupler device may include one or more tunable transmon qubit devices or tunable fluxonium qubit devices. In some implementations, the tunable couple device may include another type of tunable qubit device. The tunable coupler device may be capacitively coupled to each of the fixed-frequency qubit device 314 and the tunable qubit device 312 with respective coupling strengths. In some instances, an effective coupling between the fixed-frequency qubit device and the tunable qubit device is determined by a first coupling strength between the fixed-frequency qubit device and the tunable coupler device and a second coupling strength between the tunable coupler device and the tunable qubit device.

In some implementations, the fixed-frequency qubit device 314 has a fixed transition frequency $\omega_{F_{01}}$, while the tunable qubit device 312 has a tunable transition frequency $\omega_{T_{01}}(t)$ that changes over time. In this example, the tunability of the transition frequency can be used to generate two-qubit gates on the two qubit devices 312, 314. For instance, by modulating the tunable transition frequency $\omega_{T_{01}}(t)$ with multiple tones, an interaction can be generated between the two qubit devices 312, 314 to apply two-qubit quantum logic gates.

As shown in FIG. 3, the control line 318 can receive control signals, for example, from an external control system. In some instances, the control line 318 can include, for example, a flux bias device that is configured to apply an offset field to the tunable qubit device 312. For instance, the flux bias device may include an inductor (e.g., a partial loop, a single loop, or multiple loops of a conductor) that has a mutual inductance with the circuit loop 324. In the example shown, the transition frequency $\omega_{T_{01}}(t)$ of the tunable qubit device 312 is controlled by the magnetic flux $\Phi(t)$ by controlling the current $I$ through the control line 318. In some instances, the transition frequency $\omega_{T_{01}}(t)$ may be controlled in another manner, for instance, by another type of control signal. In some implementations, the control line 318 may include an inductance loop or another type of flux bias device that is coupled (e.g., conductively, capacitively, or inductively) to a control port to receive control signals, and to the tunable qubit device 312. In certain instances, the control signals on the control line 318 may cause the flux bias device to generate and modulate the magnetic flux in the circuit loop 324 with multiple modulation tones. In some implementations, the control signals on the control line 318 are implemented as the control signals 206 as shown in FIG. 2.

In some implementations, when the two qubit devices 312, 314 are coupled through a tunable coupler device, the effective coupling between the two qubit devices 312, 314 can be enabled by tuning a magnetic field applied on the tunable coupler device. For example, a separate control signal (e.g., a DC or an AC current) can be applied on a control line to tune the magnetic flux threading to the tunable coupler device, for example with a SQUID loop, to turn on the coupling. When the tunable coupler device is turned on, the modulated control signals can be applied on the flux bias device so as to apply the modulated magnetic flux to the tunable qubit device 312. When a two-qubit quantum logic gate is activated, the control signal applied on the tunable coupler device can be also modulated and can cause the magnetic flux in the SQUID loop of the tunable coupler device to include multiple modulation tones. In some instances, the tunable coupler device may not operate at a dynamical sweet spot since the dephasing time of the qubit defined by the tunable coupler device does not degrade too much the fidelity of the two-qubit quantum logic gate. In another instances, operation of the tunable coupler device that is used to couple the fixed-frequency qubit device and the tunable qubit device can be implemented with respect to the example process 500 shown in FIG. 5 or in another manner.

FIG. 4 is an example superconducting circuit 400 that can be represented by the equivalent circuit 300 shown in FIG. 3. In some implementations, the equivalent circuit 300 shown in FIG. 3 may be represented using another superconducting circuit or another type of system. The example superconducting circuit 400 shown in FIG. 4 includes a substrate 402 including, for example, sapphire, silicon, or another dielectric material, with circuit devices and a ground plane 404 disposed on the substrate 402. The circuit devices and the ground plane 404 can be formed by patterning one or more superconductive (e.g. superconducting metal) layers or other materials on the surface of the substrate 402.

In the example shown in FIG. 4, the example superconducting circuit 400 includes a tunable qubit device 412, a fixed-frequency qubit device 414, a flux bias device 418, and two readout resonators 416A, 416B. The tunable qubit device 412 includes a circuit loop that has two Josephson junctions in parallel, and the circuit loop is inductively coupled to (has a mutual inductance with) the flux bias device 418. The example superconducting circuit 400 also includes three signal ports: a signal port 406A that is connected to the readout resonator 416A by a signal line 420A; a signal port 406B that is connected to the flux bias device 418 by a signal line 420D; and a signal port 406C that is connected to the readout resonator 416B by a signal line 420F. The signal ports can communicate control signals between an external control system and respective devices in the example superconducting circuit 400. The example superconducting circuit 400 also includes capacitive couplings between the devices: the readout resonator 416A is capacitively coupled to the fixed-frequency qubit device 414 through a capacitor 422A; the readout resonator 416B is capacitively coupled to the tunable qubit device 412 through a capacitor 422B; and the fixed-frequency qubit device 414 is capacitively coupled to the tunable qubit device 412 through capacitors 422C. The superconducting circuit 400 may include additional or different features and components, which may be configured in another manner.

In some implementations, the signal port 406B receives a control signal, for example from the control systems 105, 202 in FIGS. 1 and 2, and delivers the control signal to the flux bias device 418 via the signal line 420D. The control signal controls the flux bias device 418 to generate and modulate a magnetic flux in the circuit loop of the tunable qubit device 412 so as to modulate the transition frequency of the tunable qubit device 412. In some instances, the control signal containing multiple modulation tones can be used to perform a control operation on a qubit defined by the tunable qubit device 412. The flux bias device 418 can generate a magnetic flux with multiple modulation tones. In certain examples, the control signal received at the signal port 406B and applied on the flux bias device 418 is implemented as the control signal 206 in FIG. 2.

In some implementations, values of parameters for the control signal are determined based on values of device parameters of the superconducting circuit 400, for example, based on qubit device parameters of the tunable qubit device 412 and the fixed-frequency qubit device 414. In some instances, the designs of other quantum circuit devices (e.g., the readout resonator 416A, 416B, the flux bias device 418, the signal lines 420A, 420D, 420F, and the coupling capacitors 422A, 422B, 422C) in the superconducting circuit 400 are further considered when the values of the parameters for the control signal are determined. For example, when the flux bias device 418 includes a planar coil inductor, the values of the parameters of the control signal applied on the planar coil inductor may be determined according to the number of turns, the width of the turns, the gap between turns, the distance between the planar coil inductor and the circuit loop, the dielectric constant of the substrate, etc. In some cases, the design and arrangement of the flux bias device and other circuit components can also be accounted for in determining the parameter values of the control signal as well. In some implementations, the values of the parameters for the control signal are identified according to the example process 500 shown in FIG. 5 or in another manner.

FIG. 5 is a flow chart showing aspects of an example process 500 for quantum control. The example process 500 can be used, for example, to operate a quantum processing unit. For instance, the example process 500 may apply one or more quantum logic gates or another type of control operation to a qubit defined by a tunable qubit device in a superconducting quantum processing unit. Examples of quantum logic gates include single-qubit quantum logic gates, two-qubit quantum logic gates, and other multi-qubit quantum logic gates. Examples of two-qubit quantum logic gates include iSWAP gates, SWAP gates, XY gates, controlled-Z gates and other controlled-rotation gates, controlled-NOT gates, and Bell-Rabi gates. The example process 500 may include additional or different operations, and the operations can be performed in the order shown or in another order.

In some implementations, the quantum processing unit may include a superconducting circuit that includes quantum circuit devices. The quantum circuit devices may include, for example, qubit devices, readout devices, flux bias devices, control lines, connections (e.g., capacitive coupling, galvanic coupling, inductive coupling, or combinations thereof) between pairs of devices, and other types of circuit devices. In some examples, the qubit devices include tunable qubit devices and fixed-frequency qubit devices. For instance, the example process 500 shown in FIG. 5 may be used to manage control operation, e.g., parametrically activated quantum logic gates, for a quantum processing unit represented by the equivalent circuits 300 shown in FIG. 3, by the circuit 400 shown in FIG. 4, or another type of quantum processing unit.

In some implementations, one or more operations in the example process 500 can be performed by a computer system, for instance, by a digital computer system having one or more digital processors (e.g., a microprocessor or other data processing apparatus) that execute instructions (e.g., instructions stored in a digital memory or other computer-readable medium) to perform the example process 500, or by another type of digital, quantum or hybrid computer system. As an example, in some cases the quantum processing unit can be deployed as the quantum processing unit 102 shown in FIG. 1, and operations in the example process 500 shown in FIG. 5 can be controlled, executed or initiated by one or more components of the control system 110 shown in FIG. 1.

The following publication, which is available at https://arxiv.org/abs/1912.09416, is referenced: Nicolas Didier, Flux control of superconducting qubits at dynamical sweet spots, arXiv:1912.09416, December 19, 2019.

At 502, qubit device parameters are obtained. The qubit device parameters representing qubit devices in a quantum processing unit can be determined by performing a measurement or characterization process, a calibration process, or another type of process. For example, a calibration process can be executed in a quantum computing system to obtain the qubit device parameters for each of the qubit devices in the quantum processing unit. In some instances, a calibration process can characterize the qubit devices that a parametrically activated quantum control operation is to be applied to. In some cases, the calibration process can also characterize neighboring qubits in the quantum processing unit (e.g., qubit devices defined by other nearby qubit devices that are coupled to either of the target qubit devices). In certain examples, the process for obtaining the qubit device parameters of the qubit devices is executed by the control system 202 of FIG. 2 or by another component in a computing system (e.g., the computing system 101). In some instances, the qubit device parameters may be predetermined using another process, which can be stored and obtained in another manner.

In some implementations, qubit device parameters may include one or more of the qubit device parameters of fixed-frequency qubit devices and tunable qubit devices in the quantum processing unit. For example, qubit device parameters, such as the drive frequency of each qubit involved in the interaction, a range of qubit operating frequencies and anharmonicity of one or more tunable qubit devices, the qubit operating frequency and anharmonicity of one or more fixed-frequency qubit devices, a reference magnetic flux value of one or more tunable qubit devices, and a coupling strength between the tunable qubit device and the fixed-frequency qubit device, or another qubit device parameter may be obtained.

At 504, values of parameters for a control signal are identified. In some implementations, the control signal may be generated according to control information. In some implementations, the control information may be provided by a user device (e.g., the user device 110) or in another manner. In some implementations, the control information contains parameters of a digital waveform (e.g., a digital representation of a control signal or control signal parameters). In some implementations, the control information contains higher-level quantum instructions, such as a quantum algorithm, quantum operations that are to be performed on qubits defined by one or more qubit devices in a quantum processing unit, and a digital waveform can be generated from the high-level quantum instructions.

In some implementations, the control information may be converted to one or more control signals by operation of a processing unit. The control signal, which can be implemented as the control signals 206, can be communicated by operation of a control system, e.g., the control system 202 in FIG. 2, and delivered to the quantum processing unit, e.g., the quantum processing unit 204 in FIG. 2. The control signals converted from the control information depends on the quantum processing unit where the control signals are implemented. For example, the frequency of the control signal depends on the modality of the quantum processing unit. When the quantum processing unit contains superconducting qubit devices, the control signal may have a frequency in a radiofrequency or microwave domain.

In some implementations, the control signal may be used to operate devices in the quantum processing unit, including qubit devices, readout devices, bias devices, flux bias devices, coupler devices, or another type of component in the quantum processing unit, e.g., the quantum processing unit 102 of the quantum computing system 103 as shown in FIG. 1. In some instances, values of parameters of the control signal are determined according to the qubit device parameters of the qubit devices of the quantum processing unit determined during the operation 502.

In some implementations, the control signal is a current signal, a voltage signal, or another type of electrical signal that is used to control the magnetic flux applied on a tunable qubit device in a quantum processing unit, e.g., the tunable qubit device 312. The control signal is used to control a flux bias device to generate and modulate the magnetic flux that is applied to the tunable qubit device and to render the tunable qubit device insensitive to flux noise. In some instances, the modulated magnetic flux includes one or more modulation tones (e.g., radio frequency or microwave frequency modes, for example, in the range of 1 MHz to 20 GHz). In certain instances, the modulated magnetic flux includes a fundamental tone with a fundamental modulation frequency and one or more harmonics of the fundamental tone with one or more harmonic frequencies.

In some implementations, when a control signal includes a digital waveform, the values of the parameters of the digital waveform may be identified by operation of an optimal control theory system, a machine learning system, or in another type of system. For example, an optimal control theory system may operate on a gradient descent algorithm or another type of algorithm for optimal control.

In some implementations, the values of the parameters of the control signal that are applied on the flux bias device can be determined according to the values of the modulation parameters of the magnetic flux to be achieved. For example, the control signal to create the modulated magnetic flux may also include multiple modulation tones. The parameters of the control signal may include one or more of a number of modulation tones, modulation frequencies of the modulation tones, amplitude of the modulation tones, relative phases, or relative durations. In some instances, the values of the parameters of the control signal that are applied on the flux bias device can be determined using a measurement process, a calibration process, or another type of process. some implementations, the values of the parameters of the control signal are determined according to the design of the other quantum circuit devices in the superconducting circuit.

In some implementations, when the values of the parameters of the control signal are determined according to the values of the modulation parameters, the operation 504 includes an operation 506, in which the modulation parameters for the magnetic flux can be first identified. As shown in the example process 500, the operation 506 includes a sub-operation 508, in which an array of dynamical sweet spots is determined, followed by another sub-operation 510, in which one of the dynamical sweet spots in the array is selected. In some instances, the array of dynamical sweet spots corresponds to a set of multiple values of the modulation parameters in a parameter space. In certain instances, the array of dynamical sweet spots can be determined according to one or more predetermined criteria. For example, the array of dynamical sweet spots can be determined by determining a dephasing rate, which is a function of a slope of the time-averaged frequency with respect to a parking flux and a slope of the time-averaged frequency with respect to a modulation amplitude. In some examples, the array of dynamical sweet spots can be determined by maximizing a fidelity of the control operation. In certain examples, the array of dynamical sweet spots can be determined by maximizing a central sideband weight. In certain examples, the array of dynamical sweet spots can be determined by minimizing a dephasing rate.

In some implementations, the values of parameters of the control signal are identified according to one or more dynamical sweet spots representing values of modulation parameters for the magnetic flux. For example, the modulation parameters for the magnetic flux include the fundamental modulation frequency, the number of modulation tones, a parking flux, a modulation amplitude, phases of modulation tones, a mixing angle, and another modulation parameter. In some implementations, the modulation parameters may include sideband weight, gate time, local Z rotations, or another parameter.

The sensitivity to flux noise under modulation directly results from the properties of the frequency band versus flux bias. The tunable-qubit frequency $f$ of a tunable superconducting qubit (e.g., the tunable qubit device 312 in FIG. 3) is an even function of the modulated magnetic flux $\Phi_{ext}$ that is flux-quantum periodic. In some instances, the tunable qubit frequency $f$ can be described in a Fourier series as below:

$$f(\phi_{ext}) = \sum_{n=0}^{\infty} F_n^{(dc)} \cos(n\phi_{ext}), \qquad (1)$$

where $\phi_{ext}$ is the phase bias, e.g., $\phi_{ext} = 2\pi\Phi_{ext}/\Phi_0$; $\Phi_0$ is the magnetic flux quantum; $\Phi_{ext}$ is the modulated magnetic flux; $F_n^{(dc)}$ is the Fourier coefficient; and $n$ is the index which is an integer. The magnetic flux quantum $\Phi_0$ may be defined as a function of fundamemtal physical constants, e.g., $\Phi_0 = h/2e$, where $h$ is the Planck's constant and $e$ is the electron charge, e.g., $e = 2.0678 \times 10^{-15}$ Wb. For a tunable superconducting qubit made of an asymmetric Superconducting QUantum Interference Device (SQUID) (e.g., the tunable qubit device shown in FIG. 3), the Fourier coefficients $F_n^{(dc)}$ decrease rapidly with the index n. In sone instances, values of the Fourier coefficients $F_n^{(dc)}$ depend on the electrical parameters of the tunable superconducting qubit, for example, the charging, Josephson energies and another electrical parameter. Using a bichromatic modulation as an example flux modulation, the modulated flux bias $\Phi_{ext}$ can be expressed as:

$$\Phi_{ext}(t) = \Phi_{dc} + \Phi_{ac}M(t), \qquad (2)$$

where $\Phi_{dc}$ is the parking flux, $\Phi_{ac}$ is the modulation amplitude; and $M(t)$ is the bichromatic modulation including two modulation tones, which can be expressed as:

$$M(t) = \cos(\alpha)\cos(2\pi f_m t + \theta_1) + \sin(\alpha)\cos(2\pi p f_m t + \theta_p), \qquad (3)$$

where $f_m$ is the modulation frequency of a first tone, $p_{fm}$ is the modulation frequency of a second tone; $\alpha$ is the mixing angle; $\theta_1, \theta_p$ are the phases of the two modulation tones; and $p$ is an integer and $p \geq 2$.

Inserting the modulated flux bias $\Phi_{ext}(t)$ in Eq. (2) into the tunable-frequency qubit frequency $f$ in Eq. (1) yields the following series,

$$f(t) = \bar{f} + \sum_{k=1}^{\infty} \sum_{l\in\mathbb{Z}} v_{k,l}\cos(2\pi k f_m t + l\theta), \qquad (4)$$

where Z is the set of all integers; $v_{k,l}$ is the Fourier coefficient, and can be expressed as:

$$v_{k,l} = 2\sum_{n=0}^{\infty} F_n^{(dc)}\cos\left[n\phi_{dc} + (p+1)l\frac{\pi}{2} - k\frac{\pi}{2}\right]$$

$$\times J_{pl-k}(n\phi_{ac}\cos\alpha)J_l(n\phi_{ac}\sin\alpha); \qquad (5)$$

$\phi_{dc}$ is the offset; $\phi_{ac}$ is the global amplification; $\theta$ is the relative phase, e.g., $\theta = \theta_p - p\theta_1$; $J_{pl-k}$ is the Bessel function of the first kind; and $\bar{f}$ is the time-averaged frequency under the multi-chromatic modulation, which can be expressed as:

$$\bar{f} = \sum_{m=0}^{\infty}\cos(m\theta)\sum_{n=0}^{\infty} F_n^{(dc)}\cos\left[n\phi_{dc} + (p+1)m\frac{\pi}{2}\right]$$

$$\times \left(2 - \delta_{m,0}\right)J_{pm}(n\phi_{ac}\cos\alpha)J_m(n\phi_{ac}\sin\alpha). \qquad (6)$$

Using Chebyshev polynomials, the time-averaged frequency $\bar{f}$ can be written as a polynomial $\bar{f} = P(x)$ in $x \equiv \cos\theta$ ($x \in [-1,1]$).

Under this flux modulation, the time evolution of the qubit frequency $f(t)$ can be expressed in terms of a Fourier series as:

$$f(t) = \bar{f} + \sum_{k=1}^{\infty} F_k^{(\mathrm{ac})} \cos(2\pi k f_m t + \theta_k), \qquad (7)$$

where $F_k^{(\mathrm{ac})}$ is the Fourier coefficient, e.g., $F_k^{(\mathrm{ac})} = |z_k|$; $\theta_k$ is the phases, e.g., $\theta_k = \mathrm{arg}z_k$, and $z_k = \sum_{l \in \mathbb{Z}} v_{k,l} e^{il\theta}$.

In some implementations, under flux modulation the qubit probes the noise spectrum $S(\omega)$ at harmonics of the modulation frequency, e.g., $S(k2\pi f_m)$, and the sensitivity is proportional to the slope of the corresponding Fourier coefficient $F_k^{(\mathrm{ac})}$ versus flux. For $1/f$ flux noise the spectral density is usually negligible at RF modulation frequencies and the dephasing rate is proportional, at leading order, to the slope of the time-averaged frequency $\bar{f}$ with respect to the parking flux $\Phi_{\mathrm{dc}}$ for additive noise and with respect to the modulation amplitude $\Phi_{\mathrm{ac}}$ for multiplicative noise. At first order, the total dephasing rate is then equal to:

$$\Gamma_\phi = 2\pi\lambda \sqrt{A_{\mathrm{dc}}^2 \left(\frac{\partial \bar{f}}{\partial \Phi_{\mathrm{dc}}}\right)^2 + A_{\mathrm{ac}}^2 \left(\frac{\partial \bar{f}}{\partial \Phi_{\mathrm{ac}}}\right)^2}, \qquad (8)$$

where $A_{\mathrm{dc}}$, $A_{ac}$ are the additive and multiplicative $1/f$ noise strength, respectively; and $\lambda$ is a constant, e.g., $\lambda = \sqrt{3/2 - \gamma - \log(2\pi T_\phi / T_{\mathrm{ir}})}$, where $\gamma$ is Euler's constant; $T_\phi$ is the dephasing time; and $T_{\mathrm{ir}}$ is the infra-red cutoff time and is of the order of the measurement time. In some instances, $\lambda \approx 3$, depending on $T_{\mathrm{ir}}$. In this case, that the multi-chromatic modulation $M(t)$ in Eq. (3) is assumed as ideally synthesized such that the modulation amplitude $\Phi_{\mathrm{ac}}$ and the parking flux $\Phi_{\mathrm{dc}}$ subsequently applied to generate the modulated flux bias $\Phi_{\mathrm{ext}}(t)$ are subjected to flux fluctuations. The multiplicative flux fluctuations on the modulation tones thus have the same source, with a strength weighted by the mixing angle $\alpha$.

As shown in FIG. 5, operation 506 includes multiple sub-operations. At a sub-operation 508, dynamical sweet spots can be determined. In some implementations, the dynamical sweet spots are determined by searching for the sets of pulse parameters (e.g., $\Phi_{\mathrm{dc}}$, $\Phi_{\mathrm{ac}}$, $\alpha$, $\theta$) for which the dephasing rate $\Gamma_\phi$ vanishes, e.g., $\Gamma_\phi = 0$. In certain instances, the dynamical sweet spots may be determined in another manner. Using the symmetries of the time-averaged frequency $\bar{f}$, it is sufficient to consider the mixing angle $\alpha \in [0, \pi/2]$ and the relative phase $\theta \in [0, \pi]$. In some instances, for a given set of the parking flux $\Phi_{\mathrm{dc}}$ and the modulation amplitude $\Phi_{\mathrm{ac}}$, the mixing angle $\alpha$ can be swept between 0 and $\pi/2$ to find the intersection between the roots of the polynomials $\partial P(x)/\partial \phi_{\mathrm{dc}}$ and $\partial P(x)/\partial \phi_{ac}$ on the real interval [-1,1].

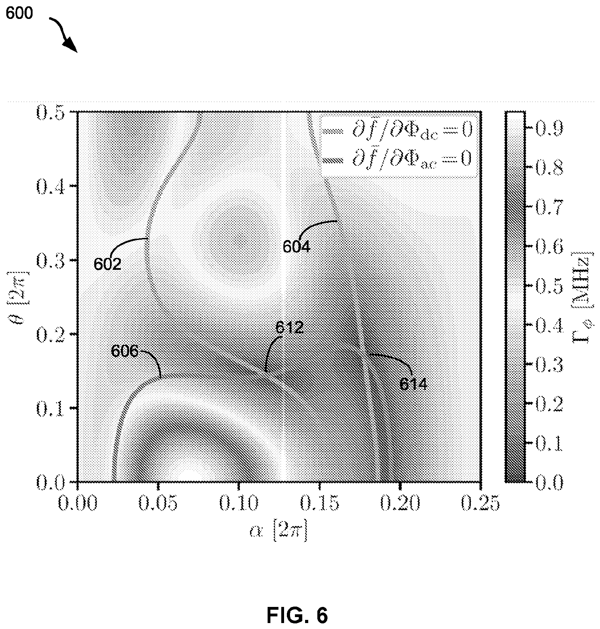

FIG. 6 is a contour plot 600 showing the dephasing rate $\Gamma_\phi$ as a function of the mixing angle $\alpha$ and the relative phase $\theta$ of a bichromatic modulation (e.g., p = 2) at $\Phi_{\mathrm{dc}} = 0.125\,\Phi_0$ and $\Phi_{\mathrm{ac}} = 0.75\,\Phi_0$. The contour plot 600 further includes three curves, e.g., first and second curves 602, 604 representing DC sweet spots determined by $\partial \bar{f}/\partial \Phi_{\mathrm{dc}} = 0$, and a third curve 606 representing AC sweet spots determined by $\partial \bar{f}/\partial \Phi_{\mathrm{ac}} = 0$. As shown in FIG. 6, two dynamical sweet spots 612, 614 can be determined at the intersections between the DC sweet spots (e.g., the first and second curves 602, 604) and the AC sweet spots (e.g., the third curve 606). In this case, the bichromatic modulation is applied on a flux bias applied on a tunable qubit device, which can be characterized by a maximum frequency $f_{max} = 5\,\mathrm{GHz}$, a minimum frequency $f_{min} = 4.2\,\mathrm{GHz}$, and an anharmonicity $\eta_{max} = 200\,\mathrm{MHz}$. The noise strengths $A_{\mathrm{dc}}$ and $A_{\mathrm{ac}}$ are equal to 33 $\mu\Phi_0$, e.g., $A_{\mathrm{dc}} = A_{ac} = 33\,\mu\Phi_0$.

At a sub-operation 510, a dynamical sweet spot is selected from the array. In some implementations, the tunable qubit device is operated at the selected dynamical sweet spot by modulating the magnetic flux according to the modulation parameters defined by the selected dynamical sweet spot and applying the modulated magnetic flux on the tunable qubit device.

The control systems and techniques described here can be used in a number of different control architectures to improve quantum logic gates applied in superconducting circuits. For example, the systems and techniques described here may provide improvements or technical advantages when applied within control architectures. For example, the systems and techniques described here may reduce exposure to noise, improve gate fidelity, reduce the likelihood of introducing errors, or another advantage. In some implementations, flux pulses are used for the application of quantum logic gates, and the fidelity of a quantum logic gate is generally set by the DC (zero-frequency) component of the flux pulse. In such a system, the control systems and techniques described here may be used, for example, to improve the fidelity of quantum logic gates by introducing AC (high-frequency) components in the flux pulse.

In some implementations, entangling gates are performed by bringing two tunable transmon qubit devices close to resonance or at resonance during the gate time. The tunable transmon qubit devices may be subjected to flux noise during the entangling gate and it is generally desirable to have the gate time be short enough to realize high-fidelity gates. In such a system, the control systems and techniques described here may be used, for example, to protect the tunable transmon qubit devices from slow flux noise during the gate time by operating the tunable transmon qubit devices at dynamical sweet spots.

In some implementations, the operating points of the tunable transmon qubit devices are optimized to avoid resonances with two-level system impurities where the tunable transmon qubit devices may not be protected from flux noise. In such a system, the control systems and techniques described here may be used, for example, to protect the tunable transmon qubit devices from slow flux noise by operating them at dynamical sweet spots.

In some implementations, the frequencies of the tunable transmon qubit devices are changed during readout where they may be sensitive to slow flux noise. In such a system, the control systems and techniques described here may be used, for example, to protect the tunable transmon qubit device during readout from slow flux noise by operating them at dynamical sweet spots.

In some implementations, parametrically-activated quantum logic gates are protected from slow flux noise at a low-amplitude modulation (less than a flux quantum) where the gate parameters are fixed. In such a system, the control systems and techniques described here may be used, for example, to generate more sweet spots where the gate parameters (e.g., the gate time, and others) can be optimized.

In some implementations, a tunable qubit device may be parked at an extremum of the frequency band, e.g., at $\Phi_{dc} = 0, 0.5\Phi_0$. In certain examples, the extremum of the frequency band is a sweet spot without modulation. Further, the symmetry of the frequency band around the parking flux $\Phi_{dc}$ can provide additional properties. When the two tones for modulating the flux bias contain an odd harmonic, e.g., when p is an odd intger, the tunable qubit device becomes first-order insensitive to additive slow flux noise, e.g., $\partial \bar{f} / \partial \Phi_{dc} = 0$, and odd sidebands vanish, e.g. $F_{2k+1}^{(ac)} = 0$. These two properties are similar to the sweet spots under a monochromatic modulation (e.g., $p = 1$). On the other hand, when the two tones for modulating the flux bias contain an even harmonic, e.g., when p is an even intger, the tunable qubit device is first-order insensitive to additive slow flux noise for $\theta = \pi/2$ and the time-averaged frequency $\bar{f}$ is unchanged under $\theta \rightarrow \pi - \theta$.

For a monochromatic modulation with four sweet spots (for a maximum modulation amplitude of $\Phi_{ac} = \Phi_0$), the bichromatic modulation unveils a continuum of dynamical sweet spots. In this case, the bichromatic modulation is applied on a flux bias applied on a tunable qubit device, which can be characterized by a maximum frequency $f_{max} = 5$ GHz, a minimum frequency $f_{min} = 4.2$ GHz, and an anharmonicity $\eta_{max} = 200$ MHz.

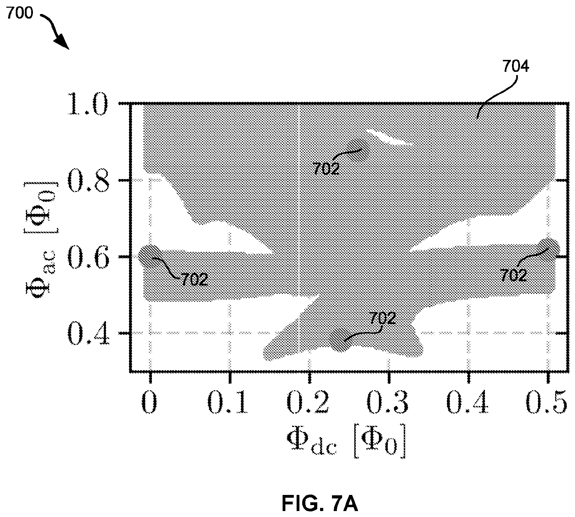

FIG. 7A is a plot 700 showing localization of dynamical sweet spots in the ($\Phi_{dc}$-$\Phi_{ac}$ plane for $p = 2$. Region 704 shows a distribution of dynamical sweet spots when a bichromatic modulation is performed. FIG. 7A further includes four sweet spots 702 which are determined when performing a monochromatic modulation (e.g., $p = 1$).

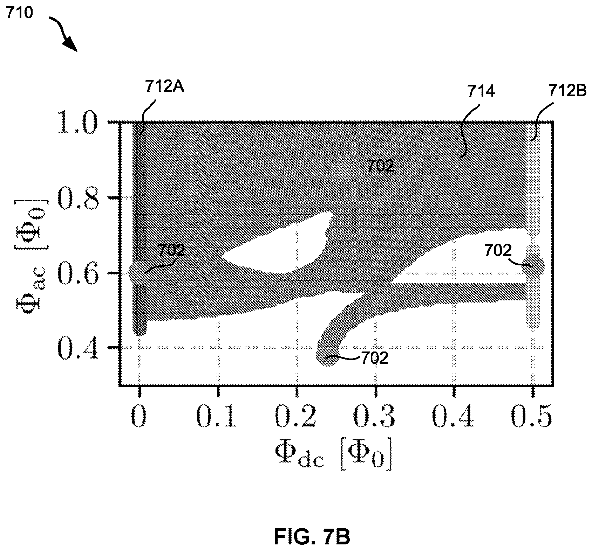

FIG. 7B is a plot 710 showing localization of dynamical sweet spots in the ($\Phi_{dc}$-$\Phi_{ac}$ plane for $p = 3$. As shown in FIG. 7B, region 712A shows a distribution of dynamical sweet spots when the tunable qubit device is parked at the minimum of the tunability band, e.g., $\Phi_{dc} = 0.5\Phi_0$. Region 712B shows a distribution of dynamical sweet spots when the tunable qubit device is parked at the maximum of the tunability band e.g., $\Phi_{dc} = 0$. Region 714 shows a distribution of dynamical sweet spots when the tunable-frequency qubit device is parked in the tunability frequency band other than the extrema. FIG. 7B further includes four sweet spots 702 which are determined when performing a monochromatic modulation (e.g., $p = 1$).

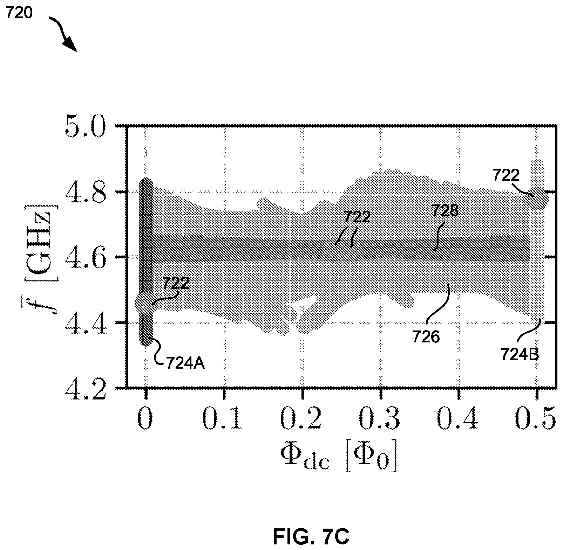

FIG. 7C is a plot 720 showing time-averaged frequency $\bar{f}$ as a function of the parking flux $\Phi_{dc}$. When a value of the parking flux $\Phi_{dc}$ is fixed, a value of the modulation amplitude $\Phi_{ac}$ can be determined to determine a dynamical sweet spot. Each points represent a different set of $(\alpha, \theta)$. As shown in FIG. 7C, region 724A shows a distribution of dynamical sweet spots when the tunable qubit device is parked at the minimum of the tunability band, e.g., $\Phi_{dc} = 0.5\Phi_0$. Region 724B shows a distribution of dynamical sweet spots when the tunable qubit device is parked at the maximum of the tunability band, e.g., $\Phi_{dc} = 0$. Region 726 shows a distribution of dynamical sweet spots when the tunable-frequnecy qubit device is in the tunability frequency for $p = 2$. Region 728 shows a distribution of dynamical sweet spots when the tunable-frequnecy qubit device is in the tunability frequency other than the extrema for $p = 3$. FIG. 7C further includes four sweet spots 722 which are determined when performing a monochromatic modulation (e.g., $p = 1$) corresponding to the sweet spots 702 shown in FIGS. 7A-7B.

The accessible time-averaged frequencies $\bar{f}$ at these sweet spots span ~60% of the tunability band for $p = 2$ and ~65% for $p = 3$. As shown in FIG. 7C, most of the accessible time-averaged frequencies $\bar{f}$ are available at all parking flux $\Phi_{dc}$ for $p = 2$; and most of the flexibility is obtained at the maximum and the minimum frequency of the band (e.g., in the regions 724A, 724B) for $p = 3$ (60 % at each extremum of the frequency band). In some implementations, the tunable qubit device can be parked at an extremum of the frequency band where it is protected without modulation and to modulate the flux bias with a bichromatic modulation with $p = 3$ to activate entangling gates on a wide range of time-averaged frequencies while suppressing odd sidebands.

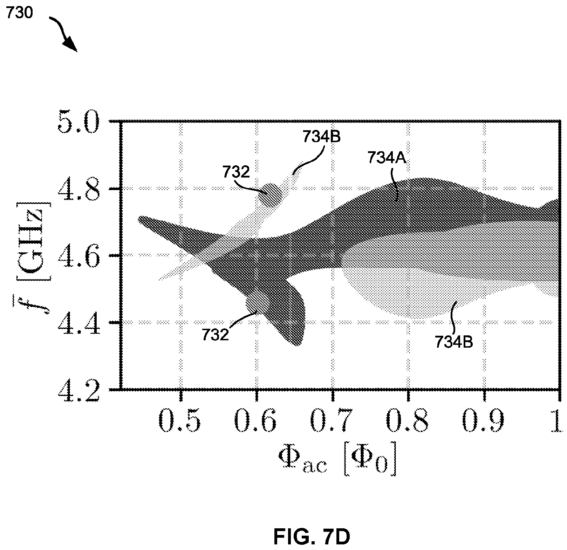

FIG. 7D is a plot 730 showing the time-averaged frequency $\bar{f}$ as a function of the modulation amplitude $\Phi_{ac}$ for $p = 3$. As shown in FIG. 7D, two sweet spots 732 are determined when performing a monochromatic modulation (e.g., $p = 1$) corresponding to the two sweet spots 702 located at $\Phi_{dc} = 0, 0.5\Phi_0$ shown in FIGS. 7A-7B. As shown in FIG. 7D, region 734A includes dynamical sweet spots when the tunable qubit device is parked at the minimum of the tunability band, e.g., $\Phi_{dc} = 0.5\Phi_0$. Region 734B includes dynamical sweet spots when the tunable qubit device is parked at the maximum of the tunability band, e.g., $\Phi_{dc} = 0$. The pink dots correspond to the results for a monochromatic modulation, e.g., $\alpha = 0$.

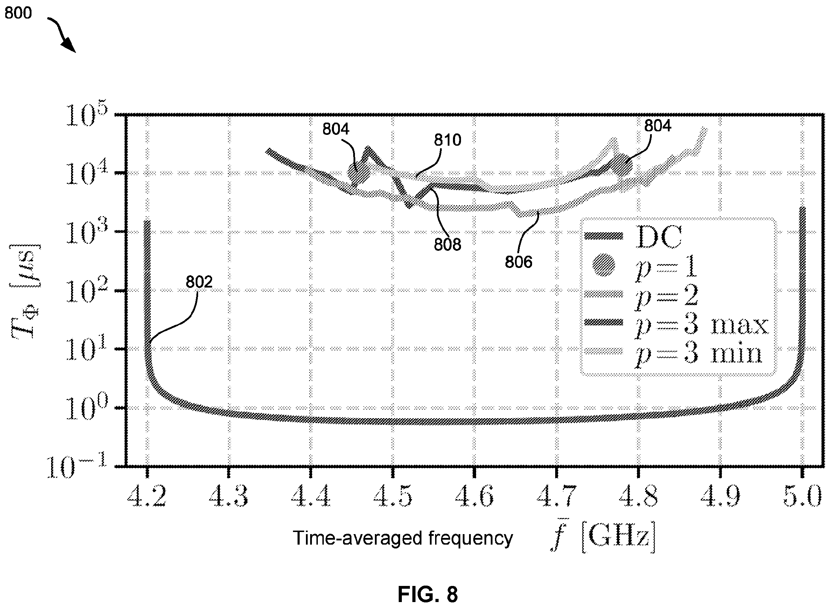

FIG. 8 is a plot 800 showing the dephasing times $T_\phi$ of a tunable qubit device as a function of the time-averaged frequency $\bar{f}$. The tunable qubit device can be characterized by a maximum frequency $f_{max} = 5$ GHz, a minimum frequency $f_{min} = 4.2$ GHz, and an anharmonicity $\eta_{max} = 200$ MHz. The plot 800 shows a behvaior of the dephasing times $T_\Phi$ of the tunable qubit device under a modulated flux bias $\Phi_{ext}(t)$ in the presence of strong $1/f$ flux noise, inlcuding a constant DC flux bias and three flux biases under a bichromatic modulation.

As shown in FIG. 8, the dephasing time is calculated by averaging the coherent dynamics over a number of shots $N_{shot}$, e.g., $N_{shot} = 4000$ or another number. The strong $1/f$ flux noise is characterized by the additive and multiplicative $1/f$ noise strengths $A_{dc}$, and $A_{ac}$, e.g., $A_{dc} = A_{ac} = 33\ \mu\Phi_0$ on 1 ns time steps. Under the $1/f$ flux noise, the off-diagonal elements of the density matrix have a Gaussian decay, e.g., $e^{-(\Gamma_\phi t)^\beta}$ with the exponent $\beta \approx 1.9$. In certain instances, the exponent $\beta$ is defined by the $1/f$ behavior of the spectral density at low frequencies above the infra-red cutoff frequency which is defined by $1/T_{ir}$. At dynamical sweet spots, the dephasing time $T_\phi$ is limited by second-order derivatives and by the noise spectrum around non-zero harmonics of the modulation frequency $f_m$. In some instances, the low-frequency flux fluctuations do not contribute to dephasing, as a result the off-diagonal density-matrix elements decay exponentially. The dephasing time $T_\phi$ is obtained by numerically averaging the coherent dynamics over realizations of $1/f$ flux noise for $A_{dc} = A_{ac} = 33\ \mu\Phi_0$ at a modulation frequency $f_m = 150$ MHz. In some implementations, the dynamical sweet spots are chosen to maximize the central sideband weight or in another manner.

As shown in curve 802 of FIG. 8, with a DC flux bias the dephasing time $T_\phi$ decreases by more than three orders of magnitude when the time-averaged frequency $\bar{f}$ moves away from the extremum of the tunability band (e.g., the minimum frequency $f_{min} = 4.2$ GHz or a maximum frequency $f_{max} = 5.0$ GHz). Dephasing times $T_\phi > 2$ ms and as large as $T_\phi \approx 10$ ms are obtained at dynamical sweet spots 804 when a flux bias under a monochromatic modulation (e.g., $p = 1$) is applied on the tunable qubit device. As shown in curves 806, 808, and 810 of FIG. 8, dephasing times $T_\phi$ in a range of 2 ms and 50 ms over two thirds of the tunability band (e.g., between 4.2 and 5.0 GHz) can be obtained when a flux bias under a bichromatic modulation (e.g., $p = 2$ and $p = 3$) is applied on the tunable qubit device. In some implementations, the coherence time can be limited by the dephasing caused by the 1/f flux noise or another source of dephasing.

In some implementations, fast entangling gates can be activated by bringing two qubits or qutrits into resonance to allow coherent exchange between two states during a desired time period. A capacitive coupling $g$ between a fixed-frequency qubit deivce, $F$, and a tunable-frequnecy qubit device, $T$ may be implemented as the capacitor 352 between the fixed-frequency qubit device 314 and the tunable qubit device 312. The capacitive coupling can generate a coupling between states of the same parity. In some implementations, when the coupling is strong and less than the transition frequencies of the respective superconducting qubits, the rotating wave approximation can be used to keep the interaction terms occurring between states of the same number of excitations. From the capacitive coupling $g$, a coupling strength of $g\mu_{01}$ between the states $|01\rangle$ and $|10\rangle$, a coupling strength of $\sqrt{2}g\mu_{12}$ between $|11\rangle$ and $|02\rangle$, and a coupling strength of $\sqrt{2}g\mu_{01}$ between $|11\rangle$ and $|20\rangle$ can be obtained. The notation $|F, T\rangle = |F\rangle \otimes |T\rangle$. In some implementations, coupling terms $\mu_{01}, \mu_{12}$ of the coupling strengths are flux dependent, and can be originated from the nonlinearity of the Josephson junction (e.g., the Josephson junctions 332, 334, 342 as shown in FIG. 3). In some instances, the coupling terms $\mu_{01}, \mu_{12} \approx 1$ or another value.

In some implementations, the flux dependence of the coupling strength in the transmon eigenbasis can be obtained in the transmon regime from perturbation theory in the small parameter $\xi(\Phi) = \sqrt{2E_C/E_J(\Phi)}$ with the charging energy $E_C$ and the effective Josephson energy

$$E_J(\Phi) = \sqrt{E_{J_1}^2 + E_{J_2}^2 + 2E_{J_1}E_{J_2}\cos(2\pi\Phi/\Phi_0)}$$

defined from the Josephson energies $E_{J_1}$ and $E_{J_2}$ of the SQUID loop (e.g., circuit loop 324). If the coupling strength g is defined at the flux $\Phi^*$, for example, a maximum $\Phi^* = 0$, the coupling terms $\mu_{01}$ and $\mu_{12}$ in $\xi(\Phi)$ are expressed as:

$$\mu_{01}(\xi) = \frac{\zeta_{01}(\xi)}{\zeta_{01}(\xi^*)}, \mu_{12}(\xi) = \frac{\zeta_{12}(\xi)}{\zeta_{12}(\xi^*)}, \quad (9)$$

where $\xi^* = \xi(\Phi^*)$, such that $\mu(\xi^*) = 1$. The parameters $\zeta_{01}$ and $\zeta_{12}$ are equal to:

$$\zeta_{01} \approx \frac{1}{\sqrt{\xi}}\left[1 - \frac{1}{2^3}\xi - \frac{11}{2^8}\xi^2 - \frac{65}{2^{11}}\xi^3 - \frac{4203}{2^{17}}\xi^4 - \frac{40721}{2^{20}}\xi^5 - \frac{1784885}{2^{25}}\xi^6 + \cdots\right]$$

$$\zeta_{12} \approx \frac{1}{\sqrt{\xi}}\left[1 - \frac{1}{2^2}\xi - \frac{73}{2^9}\xi^2 - \frac{79}{2^9}\xi^3 - \frac{113685}{2^{19}}\xi^4 - \frac{747533}{2^{21}}\xi^5 - \frac{175422349}{2^{28}}\xi^6 \right. \quad (10)$$

$$\left. + \cdots\right].$$

Bringing two qubits into resonance is readily performed with a DC flux pulse. The tunable qubit device is usually not protected from flux noise during the interaction time and high-fidelity gates are obtained with ultrashort gate times. To further improve the performance, flux modulation can be used as a protection against flux noise. Under flux modulation, the charge operator is dressed with sidebands centered around the time-averaged frequency $\bar{f}$ and separated by the modulation frequency $f_m$. The $k^{th}$ sideband at $\bar{f} + kf_m$ is characterized by a respective sideband weight $\varepsilon_k$. The sideband weights $\varepsilon_k$ are defined from the time-dependence of the transition frequencies and the coupling terms $\mu_{01}$, $\mu_{12}$. In some implementations, when a tunable qubit device is capacitively coupled to a fixed-frequency qubit device, entangling gates can be realized by bringing the time-averaged transition frequency $\bar{f}$ of the tunable qubit device in resonance with the desired transition frequency of the fixed-frequency qubit device. For example, the interaction in the one-excitation subspace is used to enact an iSWAP gate, obtained when $\bar{f}_{01} = f_{F,01}$ during the time $\tau_{iSWAP} = 1/(4|\varepsilon_0|g)$. For another example, the interaction in the two-excitation subspace temporarily involves states out of the computational basis to realize a Controlled-Z (CZ) gate, obtained at $\bar{f}_{10} = f_{F,12}$ (CZ$_{02}$) or $\bar{f}_{12} = f_{F,01}$ (CZ$_{20}$) during the time $\tau_{CZ} = 1/(2\sqrt{2}|\varepsilon_0|g)$ .

The sideband weights $\varepsilon_k$ are obtained from the time dependence of the charge operator in the interaction picture, which can be Fourier expanded as follows,

$$\mu(t)e^{i\int_0^t dt' f(t')} = \sum_{k\in\mathbb{Z}} \varepsilon_k e^{i(\bar{f}+kf_m)t}. \quad (11)$$

The maximal value of a sideband weight, $\varepsilon_{tot}$, is obtained when all the others vanish, which according to Parseval's theorem can be expressed as:

$$\varepsilon_{tot} = \sqrt{\int_0^1 dx \, \mu^2(x/f_m)}. \quad (12)$$

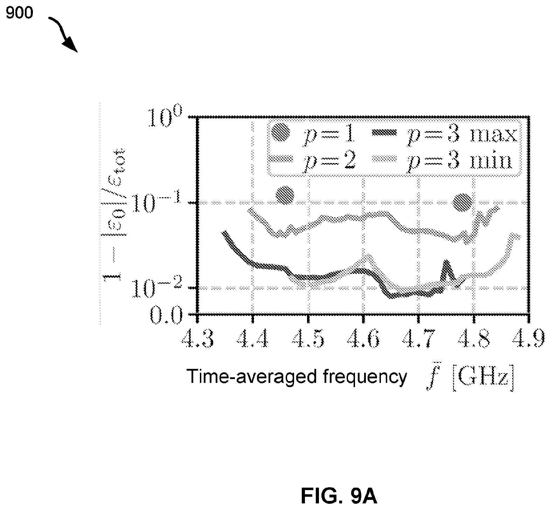

FIG. 9A is a plot 900 showing the maximum value of a sideband weight of a central sideband at $k = 0$ as a function of the time-averaged frequency $\bar{f}$, when a tunable qubit device is parked at dynamical sweet spots created by applying a flux bias under the bichromatic modulation with a modulation amplitude $\Phi_{ac}$ e.g., $\Phi_{ac} \leq 0.75 \, \Phi_0$. FIG. 9A further shows the maximum value of a sideband weight of a central sideband when a modulated flux bias is under the monochromatic modulation (e.g., p = 1).

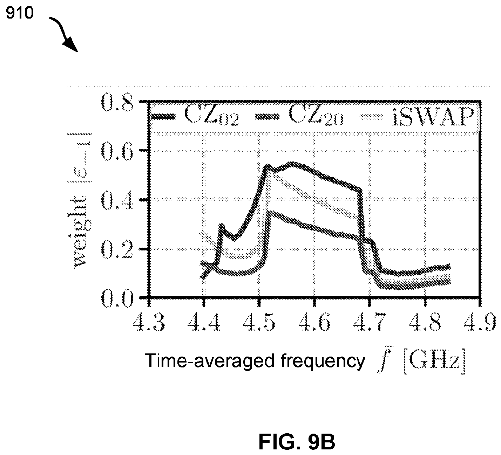

FIG. 9B is a plot 910 showing the maximum value of a sideband weight of a sideband $k = -1$ as a function of the time-averaged frequency $\bar{f}$ when a tunable qubit device is parked at dynamical sweet spots created by applying flux biases under the bichromatic modulation with a parking flux $\Phi_{dc}$, e.g., $0.2 \, \Phi_0 \leq \Phi_{dc} \leq 0.3 \, \Phi_0$. The modulated flux biases correspond to three types of two-qubit quantum logic gates, including CZ$_{02}$, CZ$_{20}$, and iSWAP gates. The modulation frequency $f_m =$ 250 MHz is chosen to activate parametric entangling gates between a tunable qubit device and a fixed-frequency qubit device. The tunable qubit device is characterized by a maximum frequency $f_{max} = 5$ GHz, a minimum frequency $f_{min} = 4.2$ GHz, and an anharmonicity $\eta_{max} = 200$ MHz. The fixed-frequency qubit device is characterized by $f_{F_{01}} = 4.2$ GHz and $f_{F_{12}} =$ 4 GHz.

In some implementations, the quantum logic gate can be optimized by choosing the dynamical sweet spots that maximize the sideband weight of the central sideband, which can be achieved when $|\varepsilon_0|$ reaches the maximal weight value

$\varepsilon_{tot}$. As shown in FIG. 9A, weights $|\varepsilon_0| > 0.99 \varepsilon_{tot}$ (e.g., $1 - |\varepsilon_0|/ \varepsilon_{tot} > 10^{-2}$) can be achieved using the monochromatic modulation or the bichromatic modulation at different p values or at different extremum of the frequency band. For large enough modulation frequencies $f_m$, that is when the pulse comprises one or more periods, the time-averaged frequency $\bar{f}$ does not depend on the modulation frequency $f_m$. In some instances, the weight of the central sideband $|\varepsilon_0|$ depends on modulation frequencies $f_m$, and can converge to the maximum value $\varepsilon_{tot}$ at large modulation frequencies $f_m$ or in another manner.

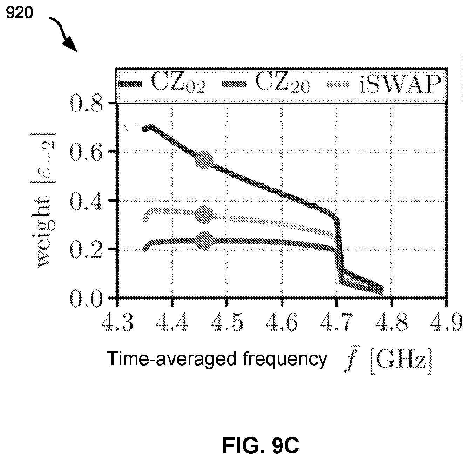

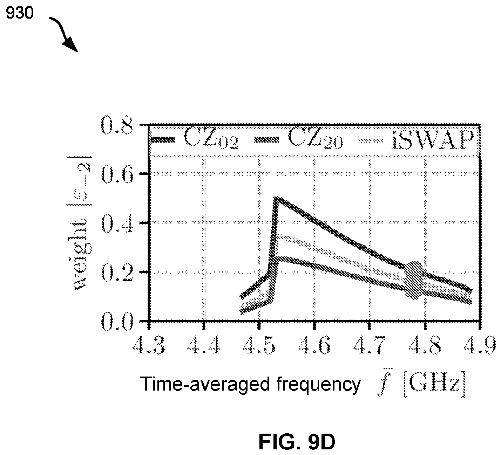

FIG. 9C is a plot 920 showing the maximum value of a sideband weight of a sideband $k = -2$ as a function of the time-averaged frequency $\bar{f}$, when a tunable qubit device is parked at dynamical sweet spots created by applying flux biases under the bichromatic modulation with p = 3 and a parking flux $\Phi_{dc} = 0$. FIG. 9D is a plot 930 showing the maximum value of a sideband weight of a sideband $k = -2$ as a function of the time-averaged frequency $\bar{f}$, when a tunable qubit device is parked at dynamical sweet spots created by applying flux biases under the bichromatic modulation with p = 3 and a parking flux $\Phi_{dc}$ = 0.5 $\Phi_0$. FIG. 9D further shows the maximum value of a sideband weight of the sideband when the flux bias is under the monochromatic modulation. The flux biases correspond to three types of two-qubit quantum logic gates, including $CZ_{02}$, $CZ_{20}$, and iSWAP gates. The modulation frequency $f_m$ = 250 MHz is chosen to activate parametric entangling gates between a tunable qubit device and a fixed-frequency qubit device. The tunable qubit device is characterized by a maximum frequency $f_{max}$ = 5 GHz, a minimum frequency $f_{min}$ = 4.2 GHz, and an anharmonicity $\eta_{max}$ = 200 MHz. The fixed-frequency qubit device is characterized by $f_{F01}$ = 4 GHz and $f_{F12}$ = 3.8 GHz.

The flexibility brought by applying the bichromatic modulation to the flux biases can also be used to optimize the performance of parametric entangling gates using satellite sidebands. To activate the coherent exchange that generates the two-qubit quantum logic gates with the $k^{th}$ sideband ($k \neq 0$), the flux bias can be modulated at the frequency $f_m = |\bar{\Delta}/k|$, where $\bar{\Delta}$ is the time-averaged detuning between the two states used in the coherent exchange. In some instances, the the time-averaged detuning $\bar{\Delta} = \bar{f}_{01} - f_{F01}$ for an iSWAP gate, $\bar{\Delta} = \bar{f}_{12} - f_{F01}$ for a $CZ_{02}$ gate, and $\bar{\Delta} = \bar{f}_{01} - f_{F12}$ for a $CZ_{20}$ gate. In some instances, the sideband weight $\varepsilon_k$ may depend on the modulation frequency $f_m$, e.g., the sideband weight $\varepsilon_k$ oscillates at low modulation frequencies and then vanishes at high frequencies. In certain examples, the gate time may be inversely proportional to the sideband weight $\varepsilon_k$, and since the modulation frequency is set by the time-averaged detuning, it is possible to reduce the gate time by optimizing the dynamical sweet spot parameters. The weight of the sideband $k = -1$ at dynamical sweet spots for p = 2 is plotted as a function of the time-averaged frequency $\bar{f}$ in FIG. 9B and the weights for $k = -2$ and $p = 3$ are plotted in FIG. 9C-9D. The modulation frequency is chosen to activate an iSWAP or a CZ gate between the tunable qubit device (e.g., a tunable transmon) and a fixed-frequency qubit device (e.g., a fixed-frequency transmon). In some instances, the sideband weight $|\varepsilon_{-2}|$ can be optimized with respect to the case of a monochromatic modulation, in particular in this configuration when the tunable qubit device is parked at the minimum of the tunability band.

Furthermore, the variety of effective transmon parameters accessible at dynamical sweet spots can be used to move the modulation frequency away from collisions with other sidebands when necessary. Dynamical sweet spots moreover provide a robustness against slow drifts of control parameters. In addition to gate optimization, sideband engineering can be used for error mitigation using Richardson's extrapolation. As shown in FIGS. 9A-9D, the gate time can be varied by changing the sideband weight at dynamical sweet spots. The effect of qubit decay and other sources of dephasing can then be circumvented by extrapolating down to zero noise the result of the algorithm of interest.

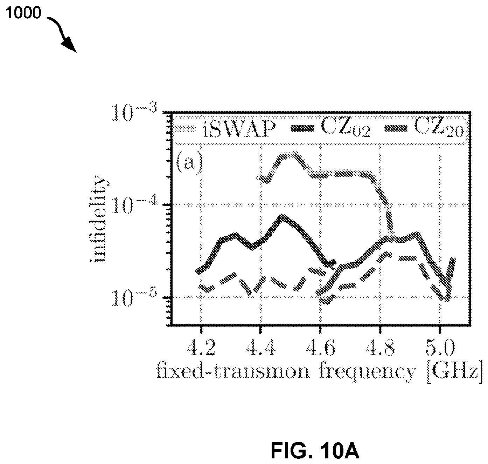

FIG. 10A is a plot 1000 showing the infidelity of three two-qubit gates operated at dynamical sweet spots as a function of a transition frequency $f_{F01}$ of the fixed-frequency qubit device, when a flux bias under a bichromatic modulation with $p = 2$ is applied on a tunable qubit device.

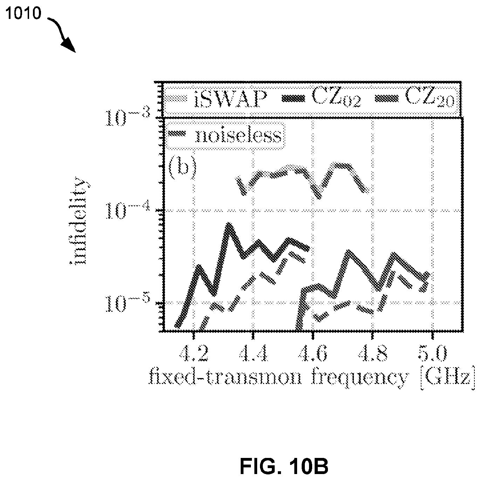

FIG. 10B is a plot 1010 showing the infidelity of three entangling gates operated at dynamical sweet spots as a function of a transition frequency $f_{F01}$ of the fixed-frequency qubit device, when a flux bias under a bichromatic modulation with $p = 3$ at a maximum frequency of the band (e.g., the park flux $\Phi_{dc} = 0$) is applied on a tunable qubit device.

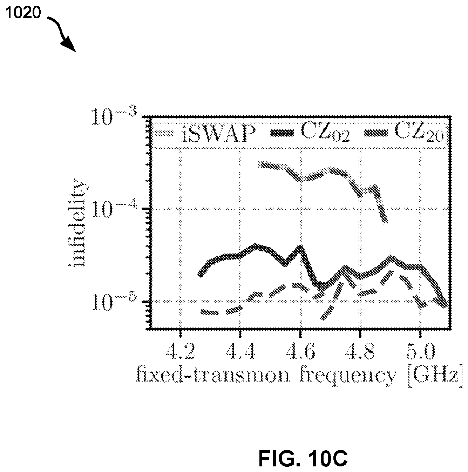

FIG. 10C is a plot 1020 showing the infidelity of three entangling gates operated at dynamical sweet spots as a function of a transition frequency $f_{F01}$ of the fixed-frequency qubit device, when a flux bias under a bichromatic modulation with p = 3 at a minimum frequency of the band (e.g, the park flux $\Phi_{dc} = 0.5\Phi_0$) is applied on a tunable qubit device.

The tunable qubit device is characterized by a maximum frequency $f_{max}$ = 5 GHz, a minimum frequency $f_{min}$ = 4.2 GHz, and an anharmonicity $\eta_{max}$ = 200 MHz. The fixed-frequency qubit device is characterized by $f_{F01}$ = 4 GHz and $f_{F12}$ = 3.8 GHz with a coupling $g$ = 2.5 MHz. The strong 1/f flux noise is characterized by the additive and multiplicative 1/f noise strengths $A_{dc}$, and $A_{ac}$, e.g., $A_{dc} = A_{ac} = 33\ \mu\Phi_0$ on 1 ns time steps.

The time-averaged transition frequency of a tunable qubit device is brought on resonance with the transition frequency of a fixed-frequency qubit device, when the flux bias under a bichromatic modulation is applied on the tunable qubit device. In some implementations, pulse parameters, including sideband weight, modulation frequency, gate time, and local Z rotations, may be optimized without flux noise (dashed lines). The dynamics are then averaged over realizations of 1/f flux noise (solid lines). High-fidelity entangling gates are accessible under 1/f flux noise for the transition frequency $f_{F01}$ of the fixed-frequency qubit device within the full tunability range.

The optimal pulse parameters are used to calculate the fidelity of the entangling gates in the presence of strong 1/f flux noise by numerically averaging the coherent dynamics over $N_{shot}$ = 4000 realizations of 1/f flux noise. The average process fidelity with respect to an idea gate can be expressed as:

$$F_{\text{avg}} = \frac{\sum_{j=1}^{N_{\text{shot}}} F_j}{N_{\text{shot}}}, \qquad (13)$$

where

$$F_j = \frac{|tr\{\hat{V}^\dagger \hat{\Pi} \hat{U}_j(\tau) \hat{\Pi}\}|^2 + d}{d^2 + d} \qquad (14)$$

where $\hat{V}$ is the ideal gate, $\hat{U}_j(\tau)$ is the evolution operator at gate time $\tau$ for shot number $j$, $d$ is dimension of the Hilbert space, and d = 4 for two qubits, and $\hat{\Pi}$ is the projector on the computational basis. The noise strengths are $A_{dc} = A_{ac} = 33 \ \mu\Phi_0$. As shown in FIGS. 10A-10C, it is possible to find high-fidelity two-qubit quantum logic gates inside the whole tunability range of the qubit. The infidelity of the CZ gate saturates around $7 \times 10^{-5}$, compatible with the coherence-limited infidelity for the dephasing times $T_\phi > 2$ ms as shown in FIG. 8. The infidelity of the iSWAP gate is mainly limited by the coherent errors on the $|11\rangle$ state that accumulates a phase ~ 4° due to the dispersive interactions in the two-excitation subspace.

In some implementations, entangling gates which are protected from flux noise, can be implemented between tunable qubit devices. They are realized by operating both tunable qubit devices at dynamical sweet spots, chosen to satisfy the resonance condition between the time-averaged transition frequencies.

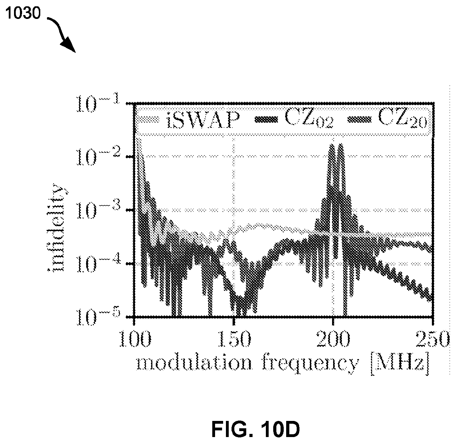

FIG. 10D is a plot 1030 showing the infidelity of three entangling gates operated at dynamical sweet spots as a function of a modulation frequency $f_m$ without flux noise for p = 3 at a maximum frequency of the band (e.g., the park flux $\Phi_{dc}$ = 0) and a fixed-transmon frequency $f_{F01}$ = 4.57 GHz. Infidelities lower than $5 \times 10^{-4}$ are achieved on a wide range of modulation frequencies, away from resonances with other parametric gates. In some instances, when the $CZ_{02}$ gate is activated with the central sideband, $\bar{f}_{12} = f_{F01}$, the iSWAP gate may be activated at the modulation frequency $f_m = |\bar{f}_{01} - f_{F01}|/k = \bar{\eta}/k$ and the $CZ_{20}$ gate may be activated at $f_m = |\bar{f}_{01} - f_{F12}|/k = (\bar{\eta} + \eta_F)/k$. In some instances, when the iSWAP, $CZ_{02}$ gates are activated at $f_m = \bar{\eta}/k$, the $CZ_{02}$ gate is activated at $f_m = \eta_F/k$. These resonance conditions appear in FIG. 10D around $f_m =$ 100 MHz and $f_m =$ 200 MHz for $CZ_{02}$ and $CZ_{20}$ gates and $f_m =$ 100 MHz for the iSWAP gate since odd sideband weights vanish for $p = 3$ around the maximum frequency of the band.

In some implementations, the tunable qubit device, when not used in entangling gates, can be parked at a sweet spot with no modulation located at a maximum or a minimum of the frequency band. It is, however, sometimes not possible due to the presence, for instance, of two-level systems (TLS) close to these extrema. Under modulation when the central sideband weight tends to its maximum value, the other sideband weights vanish and the qubit behaves closely to an undriven qubit defined by the time-averaged transition frequency. At a dynamical sweet spot with a time-averaged frequency $\bar{f}$ sufficiently away from the TLS frequency, the tunable qubit device is affected by neither slow flux noise nor by the TLS.

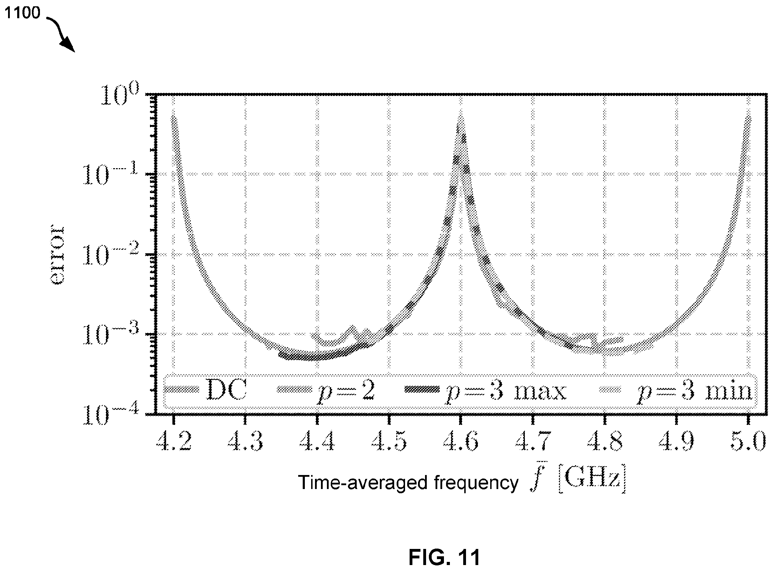

FIG. 11 is a plot 1100 showing the error as a function of the time-averaged frequency $\bar{f}$. As shown in FIG. 11, the maximum error can be obtained at the maximum frequency, at the minimum frequency, and in the middle of the frequency band with respect to identity for a tunable qubit device coupled to three two-level systems (TLS) with a coupling of 3 MHz at various operating points (over 1 $\mu$s). The leakage to the TLS at dynamical sweet spots follows the error obtained when a DC flux bias is applied on the tunable qubit device. The case $p = 2$ is slightly less efficient due to the lower values of the central sideband weights obtained as shown in FIG. 9A.

As shown in FIG. 11, even though the tunable qubit device is periodically driven through the TLS anticrossings, the error for a bichromatic modulation follows the one of a DC bias. A qubit driven by a flux bias under modulation behaves like a undriven qubit when the central sideband weight is maximized.

Similarly, it is possible to perform single-qubit quantum logic gates under modulation by driving the qubit at the time-averaged frequency $\bar{f}$. Dispersive qubit measurement is possible as well under modulation, the dispersive shift can even be engineered by choosing a dynamical sweet spot with optimal time-averaged detuning with the readout resonator. In both cases, the modulation frequency can be optimized if necessary, for instance to avoid that the time-averaged frequency $\bar{f}$ or detuning with the resonator is close to a sideband frequency. In some implementations, tunable qubit devices can be parked at dynamical sweet spots to avoid both collisions and dephasing from slow flux noise.

At 512, the control signal is generated. In some implementations, the control signal is generated according to the values of the parameters of the control signal identified during the operation 504 or in another manner. In certain instances, the control signal can be generated by operation of a control system, e.g., the control system 105 of a quantum computing system 103 as shown in FIG. 1. In some instances, the control signal is generated using an arbitrary waveform generator (AWG) or another type of hardware resource.

At 514, the control signal is delivered to the flux bias device associated with the tunable qubit device. In some implementations, the magnetic flux can be generated and modulated by applying the control signal on the flux bias device, which is inductively coupled to the tunable qubit device. In some implementations, the control signal is a bichromatic modulation signal, or another type of multi-chromatic modulation signal. In some instances, the sensitivity of the tunable qubit device to slow flux noise can be reduced by performing the multi-chromatic modulation to the magnetic flux and parking the tunable qubit device at a selected sweet spot.

Some of the subject matter and operations described in this specification can be implemented in digital electronic circuitry or quantum processor circuitry, or in computer software, firmware, or hardware, including the structures disclosed in this specification and their structural equivalents, or in combinations of one or more of them. Some of the subject matter described in this specification can be implemented as one or more computer programs, i.e., one or more modules of computer program instructions, encoded on a computer storage medium for execution by, or to control the operation of, data-processing apparatus. A computer storage medium can be, or can be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media.

Some of the operations described in this specification can be implemented as operations performed by a data processing apparatus on data stored on one or more computer-readable storage devices or received from other sources.

The term "data-processing apparatus" encompasses all kinds of apparatus, devices, and machines for processing data, including by way of example a programmable processor, a classical or quantum computer, a system on a chip, or multiple ones, or combinations, of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program, or in multiple coordinated files (e.g., files that store one or more modules, sub programs, or portions of code). A computer program can be deployed to be executed on one computer or on multiple computers that are located at one site or distributed across multiple sites and interconnected by a communication network.

Some of the processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application specific integrated circuit), quantum information processing circuitry, or other types of systems.

Processors suitable for the execution of a computer program include, by way of example, both general and special purpose microprocessors, quantum information processors, and processors of any kind of digital or quantum computer. Elements of a computer can include a processor that performs actions in accordance with instructions, and one or more memory devices that store the instructions and data. A computer may also include, or be operatively coupled to receive data from or transfer data to, or both, one or more mass storage devices for storing data, e.g., magnetic disks, magneto optical disks, or optical disks. However, a computer need not have such devices. Moreover, a computer can be embedded in another device. Devices suitable for storing computer program instructions and data include all forms of non-volatile memory, media and memory devices, including by way of example quantum memory systems, semiconductor memory devices (e.g., EPROM, EEPROM, flash memory devices, and others), etc. In some cases, the processor and the memory can be supplemented by, or incorporated in, special purpose logic circuitry.

To provide for interaction with a user, operations can be implemented on a computer having a display device (e.g., a monitor, or another type of display device) for displaying information to the user and a keyboard and a pointing device (e.g., a mouse, a trackball, a tablet, a touch sensitive screen, or another type of pointing device) by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending data to and receiving data from a device that is used by the user; for example, by exchanging network packets with the device.

A computer system may include a single computing device, or multiple computers that operate in proximity or generally remote from each other and typically interact through a communication network. Examples of communication networks include a local area network ("LAN") and a wide area network ("WAN"), an inter-network (e.g., the Internet), a network comprising a satellite link, and peer-to-peer networks (e.g., ad hoc peer-to-peer networks). A relationship of client and server may arise by virtue of computer programs running on the respective computers and having a client-server relationship to each other.

While this specification contains many details, these should not be construed as limitations on the scope of what may be claimed, but rather as descriptions of features specific to particular examples. Certain features that are described in this specification in the context of separate implementations can also be combined. Conversely, various features that are described in the context of a single implementation can also be implemented in multiple embodiments separately or in any suitable subcombination.

A number of embodiments have been described. Nevertheless, it will be understood that various modifications can be made within the scope of the following claims.

## Claims

1. A quantum computing method comprising:

   identifying values of parameters for a control signal to apply a control operation to a qubit defined by a tunable qubit device in a superconducting quantum processing unit;
   generating the control signal according to the values of the parameters, the control signal comprising a plurality of modulation tones; and
   applying the control operation to the qubit by delivering the control signal to a flux bias device associated with the tunable qubit device, wherein the control signal controls a magnetic flux applied to the tunable qubit device by the flux bias device and renders the qubit insensitive to flux noise by operating the tunable qubit device at a dynamical sweet spot, wherein the dynamical sweet spot represents an operating point at which the qubit is insensitive, to first order, to both additive and multiplicative slow flux noise.

2. The method of claim 1, comprising determining the values of the parameters based on values of qubit device parameters of the tunable qubit device.

3. The method of claim 1, comprising determining the values of the parameters based on values of qubit device parameters of the superconducting quantum processing unit, wherein the superconducting quantum processing unit comprises a fixed-frequency qubit device, and the qubit device parameters comprise at least one of a range of qubit operating frequency and anharmonicity of the tunable qubit device, an operating frequency and anharmonicity of the fixed-frequency qubit device, and a coupling between the tunable qubit device and the fixed-frequency qubit device.

4. The method of claim 1, wherein the control operation comprises a quantum logic gate.

5. The method of claim 1, wherein the superconducting quantum processing unit comprises a fixed-frequency qubit device, and the control operation comprises a two-qubit quantum logic gate applied to a pair of qubits defined by the fixed-frequency qubit device and the tunable qubit device.

6. The method of claim 1, wherein the plurality of modulation tones comprises a fundamental tone with a fundamental frequency and one or more harmonics of the fundamental tone with one or more harmonic frequencies.

7. The method of claim 1, wherein the control signal is a bichromatic modulation signal comprising a first modulation tone with a first modulation frequency and a second modulation tone with a second modulation frequency, and the second modulation frequency is equal to two or more integer multiples of the first modulation frequency.

8. The method of claim 1, wherein identifying the values of the parameters comprises identifying values of parameters of a digital waveform.

9. The method of claim 1, wherein the parameters are identified by an optimal control theory system or a machine learning system.

10. The method of any one of claims 1 through 7, wherein identifying the values of the parameters comprises:

   determining an array of dynamical sweet spots corresponding to a set of multiple values of modulation parameters in a parameter space, wherein the array of dynamical sweet spots represents an array of operating points at which the qubit is insensitive, to first order, to slow flux noise; and

selecting the values of the modulation parameters from the set according to one or more predetermined criteria.

11. The method of claim 10, wherein determining the array of dynamical sweet spots comprises: determining a dephasing rate that is a function of a first slope of a time-averaged frequency with respect to a parking flux and a second slope of a time-averaged frequency with respect to a modulation amplitude.

12. The method of claim 10, wherein the one or more predetermined criteria comprise:

maximizing a fidelity of the control operation; or
minimizing a dephasing rate; or
maximizing a central sideband weight, wherein the central sideband weight represents a weight of a sideband at a time-averaged transition frequency of the tunable qubit device during application of the control signal.

13. The method of claim 10, wherein the parameter space comprises at least one of a number of the modulation tones, modulation frequencies of the modulation tones, amplitudes of the modulation tones, relative phases, or relative durations.

14. The method of claim 13, wherein the control signal comprises a fundamental tone and one or more harmonics of the fundamental tone, the modulation parameters comprise a modulation frequency of the fundamental tone, and the value of the modulation frequency is determined by a time-averaged frequency of the tunable qubit device.

15. A quantum computing system comprising:

a superconducting quantum processing unit comprising a tunable qubit device and a flux bias device associated with the tunable qubit device; and
a control system communicably coupled to the quantum processing unit, the control system configured to perform the method of any one of claims 1-14.

**Patentansprüche**

1. Quantenrechenverfahren, umfassend:

Identifizieren von Parameterwerten für ein Steuersignal, um eine Steueroperation auf ein Qubit anzuwenden, das durch eine abstimmbare Qubitvorrichtung in einer supraleitenden Quantenverarbeitungseinheit definiert ist;
Erzeugen des Steuersignals nach den Werten der Parameter, wobei das Steuersignal eine Vielzahl von Modulationstönen umfasst; und
Anwenden der Steueroperation auf das Qubit durch Liefern des Steuersignals an eine Flussvorspannungsvorrichtung, die mit der abstimmbaren Qubitvorrichtung verbunden ist, wobei das Steuersignal einen magnetischen Fluss steuert, der durch die Flussvorspannungsvorrichtung an die abstimmbare Qubitvorrichtung angelegt wird, und das Qubit durch Betreiben der abstimmbaren Qubitvorrichtung an einem dynamischen Sweet-Punkt unempfindlich gegen Flussrauschen macht, wobei der dynamische Sweet-Punkt einen Betriebspunkt darstellt, an dem das Qubit sowohl gegen additives als auch multiplikatives langsames Flussrauschen erster Ordnung unempfindlich ist.

2. Verfahren nach Anspruch 1, umfassend das Bestimmen der Werte der Parameter basierend auf den Werten der Qubitvorrichtungsparameter der abstimmbaren Qubitvorrichtung.

3. Verfahren nach Anspruch 1, umfassend das Bestimmen der Werte der Parameter basierend auf Werten von Qubitvorrichtungsparametern der supraleitenden Quantenverarbeitungseinheit, wobei die supraleitende Quantenverarbeitungseinheit eine Festfrequenzqubitvorrichtung umfasst und die Qubitvorrichtungsparameter mindestens einen Bereich von Qubitbetriebsfrequenz und Anharmonizität der abstimmbaren Qubitvorrichtung, eine Betriebsfrequenz und Anharmonizität der Festfrequenzqubitvorrichtung und eine Kopplung zwischen der abstimmbaren Qubitvorrichtung und der Festfrequenzqubitvorrichtung umfassen.

4. Verfahren nach Anspruch 1, wobei die Steueroperation ein quantenlogisches Gatter umfasst.

5. Verfahren nach Anspruch 1, wobei die supraleitende Quantenverarbeitungseinheit eine Festfrequenzqubitvorrichtung umfasst und die Steueroperation ein Zwei-Qubit-Quantenlogikgatter umfasst, das auf ein Paar von Qubits angewendet wird, die durch die Festfrequenzqubitvorrichtung und die abstimmbare Qubitvorrichtung definiert sind.

6. Verfahren nach Anspruch 1, wobei die Vielzahl von Modulationstönen einen Grundton mit einer Grundfrequenz und eine oder mehrere Obertöne des Grundtons mit einer oder mehreren Obertonfrequenzen umfasst.

7. Verfahren nach Anspruch 1, wobei das Steuersignal ein bichromatisches Modulationssignal ist, das einen ersten Modulationston mit einer ersten Modulationsfrequenz und einen zweiten Modulationston mit einer zweiten Modulationsfrequenz umfasst, und die zweite Modulationsfrequenz gleich zwei oder mehreren ganzzahligen Vielfachen der ersten Modulationsfrequenz ist.

8. Verfahren nach Anspruch 1, wobei das Identifizieren der Werte der Parameter das Identifizieren von Werten von Parametern einer digitalen Wellenform umfasst.

9. Verfahren nach Anspruch 1, wobei die Parameter durch ein optimales Steuerungstheoriesystem oder ein maschinelles Lernsystem ermittelt werden.

10. Verfahren nach einem der Ansprüche 1 bis 7, wobei das Identifizieren der Werte der Parameter Folgendes umfasst:

Bestimmen eines Arrays dynamischer Sweet-Punkte, die einem Satz mehrerer Werte von Modulationsparametern in einem Parameterraum entsprechen, wobei das Array dynamischer Sweet-Punkte ein Array von Betriebspunkten darstellt, bei denen das Qubit bis zu einer ersten Ordnung unempfindlich gegenüber langsamem Flussrauschen ist; und
Auswählen der Werte der Modulationsparameter aus dem Satz nach einem oder mehreren vorgegebenen Kriterien.

11. Verfahren nach Anspruch 10, wobei das Bestimmen des Arrays von dynamischen Sweet-Punkten Folgendes umfasst: Bestimmen einer Dephasierungsrate, die eine Funktion einer ersten Steigung einer zeitlich gemittelten Frequenz im Verhältnis zu einem Parkfluss und einer zweiten Steigung einer zeitlich gemittelten Frequenz im Verhältnis zu einer Modulationsamplitude ist.

12. Verfahren nach Anspruch 10, wobei das eine oder die mehreren vorbestimmten Kriterien Folgendes umfassen:

Maximieren der Genauigkeit der Steueroperation; oder
Minimieren einer Dephasierungsrate; oder
Maximieren eines zentralen Seitenbandgewichts, wobei das zentrale Seitenbandgewicht ein Gewicht eines Seitenbandes bei einer zeitlich gemittelten Übergangsfrequenz der abstimmbaren Qubitvorrichtung während der Anwendung des Steuersignals darstellt.

13. Verfahren nach Anspruch 10, wobei der Parameterraum mindestens eines von einer Anzahl der Modulationstöne, Modulationsfrequenzen der Modulationstöne, Amplituden der Modulationstöne, relative Phasen oder relative Dauern umfasst.

14. Verfahren nach Anspruch 13, wobei das Steuersignal einen Grundton und einen oder mehrere Obertöne des Grundtons umfasst, die Modulationsparameter eine Modulationsfrequenz des Grundtons umfassen und der Wert der Modulationsfrequenz durch eine zeitlich gemittelte Frequenz der abstimmbaren Qubitvorrichtung bestimmt wird.

15. Quantenrechensystem, umfassend:

eine supraleitende Quantenverarbeitungseinheit, die eine abstimmbare Qubitvorrichtung und eine mit der abstimmbaren Qubitvorrichtung verbundene Flussvorspannungsvorrichtung umfasst; und
ein kommunikativ mit der Quantenverarbeitungseinheit gekoppeltes Steuersystem, wobei das Steuersystem konfiguriert ist, um das Verfahren nach einem der Ansprüche 1 bis 14 durchzuführen.

**Revendications**

1. Procédé d'informatique quantique comprenant :

   l'identification des valeurs de paramètres pour un signal de contrôle afin d'appliquer une opération de contrôle à un qubit défini par un dispositif à qubit accordable dans une unité de traitement quantique supraconductrice ; la génération du signal de contrôle selon les valeurs des paramètres, le signal de contrôle comprenant une pluralité de tonalités de modulation ; et l'application de l'opération de contrôle au qubit en délivrant le signal de contrôle à un dispositif de polarisation de flux associé au dispositif à qubit accordable, dans lequel le signal de contrôle contrôle un flux magnétique appliqué au dispositif à qubit accordable par le dispositif de polarisation de flux et rend le qubit insensible au bruit de flux en faisant fonctionner le dispositif à qubit accordable à un point d'équilibre dynamique, dans lequel le point d'équilibre dynamique représente un point de fonctionnement auquel le qubit est insensible, au premier ordre, au bruit de flux lent additif et multiplicatif.

2. Procédé selon la revendication 1, comprenant la détermination des valeurs des paramètres sur la base des valeurs de paramètres de dispositif à qubit du dispositif à qubit accordable.

3. Procédé selon la revendication 1, comprenant la détermination des valeurs des paramètres sur la base des valeurs de paramètres de dispositif à qubit de l'unité de traitement quantique supraconductrice, dans lequel l'unité de traitement quantique supraconductrice comprend un dispositif à qubit à fréquence fixe, et les paramètres de dispositif à qubit comprennent au moins l'un parmi une plage de fréquence de fonctionnement de qubit et une anharmonicité du dispositif à qubit accordable, une fréquence de fonctionnement et une anharmonicité du dispositif à qubit à fréquence fixe, et un couplage entre le dispositif à qubit accordable et le dispositif à qubit à fréquence fixe.

4. Procédé selon la revendication 1, dans lequel l'opération de contrôle comprend une porte logique quantique.

5. Procédé selon la revendication 1, dans lequel l'unité de traitement quantique supraconductrice comprend un dispositif à qubit à fréquence fixe, et l'opération de contrôle comprend une porte logique quantique à deux qubits appliquée à une paire de qubits définie par le dispositif à qubit à fréquence fixe et le dispositif à qubit accordable.

6. Procédé selon la revendication 1, dans lequel la pluralité de tonalités de modulation comprend une tonalité fondamentale avec une fréquence fondamentale et une ou plusieurs harmoniques de la tonalité fondamentale avec une ou plusieurs fréquences harmoniques.

7. Procédé selon la revendication 1, dans lequel le signal de contrôle est un signal de modulation bichromatique comprenant une première tonalité de modulation avec une première fréquence de modulation et une seconde tonalité de modulation avec une seconde fréquence de modulation, et la seconde fréquence de modulation est égale à deux ou plusieurs multiples entiers de la première fréquence de modulation.

8. Procédé selon la revendication 1, dans lequel l'identification des valeurs des paramètres comprend l'identification des valeurs de paramètres d'une forme d'onde numérique.

9. Procédé selon la revendication 1, dans lequel les paramètres sont identifiés par un système de théorie de contrôle optimal ou un système d'apprentissage automatique.

10. Procédé selon l'une quelconque des revendications 1 à 7, dans lequel l'identification des valeurs des paramètres comprend :

    la détermination d'un réseau de points d'équilibre dynamiques correspondant à un ensemble de valeurs multiples de paramètres de modulation dans un espace de paramètres, dans lequel le réseau de points d'équilibre dynamiques représente un réseau de points de fonctionnement auxquels le qubit est insensible, au premier ordre, au bruit de flux lent ; et la sélection des valeurs des paramètres de modulation à partir de l'ensemble selon un ou plusieurs critères prédéterminés.

11. Procédé selon la revendication 10, dans lequel la détermination du réseau de points d'équilibre dynamiques comprend :

la détermination d'un taux de déphasage qui est une fonction d'une première pente d'une fréquence à moyenne temporelle par rapport à un flux de stationnement et d'une seconde pente d'une fréquence à moyenne temporelle par rapport à une amplitude de modulation.

**12.** Procédé selon la revendication 10, dans lequel l'un ou plusieurs critères prédéterminés comprennent :

la maximisation de la fidélité de l'opération de contrôle ; ou
la minimisation d'un taux de déphasage ; ou
la maximisation d'un poids de bande latérale centrale, dans lequel le poids de bande latérale centrale représente un poids d'une bande latérale à une fréquence de transition à moyenne temporelle du dispositif à qubit accordable pendant l'application du signal de contrôle.

**13.** Procédé selon la revendication 10, dans lequel l'espace de paramètres comprend au moins l'un parmi un nombre de tonalités de modulation, des fréquences de modulation des tonalités de modulation, des amplitudes des tonalités de modulation, des phases relatives ou des durées relatives.

**14.** Procédé selon la revendication 13, dans lequel le signal de contrôle comprend une tonalité fondamentale et une ou plusieurs harmoniques de la tonalité fondamentale, les paramètres de modulation comprennent une fréquence de modulation de la tonalité fondamentale, et la valeur de la fréquence de modulation est déterminée par une fréquence à moyenne temporelle du dispositif à qubit accordable.

**15.** Système d'informatique quantique comprenant :

une unité de traitement quantique supraconductrice comprenant un dispositif à qubit accordable et un dispositif de polarisation de flux associé au dispositif à qubit accordable ; et
un système de contrôle couplé de manière communicante à l'unité de traitement quantique, le système de contrôle étant configuré pour réaliser le procédé selon l'une quelconque des revendications 1 à 14.

**FIG. 1**

- User Device 110C
- User Device 110B
- Wide Area Network 115
- User Device 110A

Computing System 101

Servers 108
- Classical Processors 111
- Memory 112

Quantum Computing System 103A
- Control System 105A
  - Controllers 106A
  - Signal Hardware 104A
- Quantum Processing Unit 102A

Quantum Computing System 103B
- Control System 105B
  - Controllers 106B
  - Signal Hardware 104B
- Quantum Processing Unit 102B

- Local Network 109
- Other Resources 107

FIG. 2

**FIG. 3**

EP 4 062 332 B1

**FIG. 4**

**FIG. 5**

FIG. 6

**FIG. 7A**

**FIG. 7B**

**FIG. 7C**

FIG. 7D

FIG. 8

FIG. 9A

910

**FIG. 9B**

920

FIG. 9C

930

FIG. 9D

1000

FIG. 10A

1010

**FIG. 10B**

1020

FIG. 10C

1030

**FIG. 10D**

EP 4 062 332 B1

**FIG. 11**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62939020

### Non-patent literature cited in the description

- **DIDIER NICOLAS et al.** *AC flux sweet spots in parametrically-modulated superconducting qubits*, 26 June 2019, 1-11, https://arxiv.org/pdf/1807.01310.pdf
- **QUIL**. A Practical Quantum Instruction Set Architecture. *arXiv:1608.03355v2*, 17 February 2017
- **NICOLAS DIDIER**. Flux control of superconducting qubits at dynamical sweet spots. *arXiv:1912.09416*, 19 December 2019